# EUROPEAN PATENT APPLICATION

(11) **EP 4 521 594 A1**
(43) Date of publication of application: **12.03.2025**
(21) Application number: 24199070.4
(22) Date of filing: 06.09.2024
(51) Int. Cl.: H02J 7/00, A01G 3/00, A01G 3/053, H02J 7/02, H02J 7/34

(54) **GARDENING APPARATUS**

(30) Priority: 07.09.2023 CN 202311154757; 07.09.2023 CN 202322437325 U; 07.09.2023 CN 202311155678; 07.09.2023 CN 202322433844 U; 07.09.2023 CN 202322433873 U; 13.10.2023 CN 202322761566 U; 08.01.2024 CN 202420043464 U; 08.01.2024 CN 202420050536 U
(71) Applicant: Greenworks (Jiangsu) Co., Ltd., Changzhou, Jiangsu 213023 (CN)
(72) Inventor: GAO, Liqiang, Changzhou 213023 (CN); ZHUANG, Xian, Changzhou 213023 (CN); LI, Zhiyuan, Changzhou 213023 (CN); ZHOU, Zehuan, Changzhou 213023 (CN); LI, Qiang, Changzhou 213023 (CN); HUO, Xiaohui, Changzhou 213023 (CN); ZHU, Yanqiang, Changzhou 213023 (CN); WANG, Kai, Changzhou 213023 (CN); ZHOU, Wenxia, Changzhou 213023 (CN)
(74) Representative: Bergenstråhle & Partners AB

(57) **Abstract**

A gardening apparatus includes a tool device and a battery module. The battery module is coupled to the tool device for supplying power to drive the tool device. The battery module includes a housing with a receiving cavity, at least one battery cell disposed within the receiving cavity, a power management module electrically connected to the at least one battery cell and at least one power interface electrically connected to the power management module and accessible from outside the housing. The power management module is configured to control power flow between the at least one battery cell and the at least one power interface.

## Description

### TECHNICAL FIELD

The present invention is related to a gardening apparatus, and more particularly related to a gardening apparatus with a flexible battery configuration.

### BACKGROUND

In the realm of modern gardening and landscaping, the importance of efficient and reliable tools cannot be overstated. At the heart of these tools lies their power source - the battery. The battery system's capability and performance have become crucial factors in determining whether a gardening tool is truly useful and convenient for handling various tasks in horticulture and landscape maintenance.

Traditionally, gardening tools were either manual or powered by gasoline engines. However, the shift towards more environmentally friendly and user-friendly options has led to the widespread adoption of battery-powered tools. These tools offer numerous advantages, including reduced noise pollution, zero emissions, and easier maintenance. Yet, their effectiveness is directly tied to the quality and capacity of their battery systems.

One of the primary challenges in using battery-powered gardening tools is the limited runtime. Gardeners and landscaping professionals often find themselves interrupted in their work when batteries run out of charge. This interruption can significantly impact productivity and job completion times, especially in larger gardens or commercial landscaping projects.

Another critical aspect is the charging time of these batteries. Current battery systems often require extended periods to recharge fully, which can lead to downtime and reduced efficiency. This limitation is particularly problematic in professional settings where time is of the essence, and tools need to be ready for use at a moment's notice.

The weight and size of battery systems also play a crucial role in the usability of gardening tools. Heavier batteries can make tools cumbersome to use, especially for extended periods or in tasks requiring precision and maneuverability. Conversely, smaller, lighter batteries might not provide sufficient power or runtime for more demanding tasks.

In the context of larger gardening or landscaping operations, the management of multiple battery-powered tools presents its own set of challenges. As highlighted in the provided background information, many current charging systems are limited in their capacity to charge multiple devices simultaneously. This limitation often results in a need for constant human intervention to switch devices, leading to inefficiencies and potential oversights in the charging process.

The inability to automatically switch between charging different devices not only requires more manual labor but also increases the risk of human error. It can lead to situations where some tools are left uncharged, potentially disrupting work schedules and reducing overall productivity in gardening and landscaping operations.

Furthermore, the application scenarios for current battery systems and chargers are often limited. They may not be versatile enough to adapt to various outdoor conditions or different types of gardening tools, restricting their usefulness in diverse landscaping environments.

The energy storage capacity of current battery systems also poses limitations. Many existing systems struggle to provide sufficient power for a full day's work, especially when dealing with more power-hungry tools or extensive landscaping projects. This shortcoming often necessitates carrying multiple batteries or frequent trips to charging stations, disrupting workflow and reducing efficiency.

Given these challenges, it is evident that if a better battery system can be provided, it would be highly beneficial in developing more effective and convenient gardening tools. An improved battery system could offer longer runtimes, faster charging times, lighter weight, and the ability to power multiple tools efficiently. Such advancements would not only enhance the performance of individual tools but also revolutionize the overall approach to garden and landscape maintenance, making tasks more manageable, efficient, and environmentally friendly.

### SUMMARY

In some embodiments, a gardening apparatus includes a tool device and a battery module.

The battery module is coupled to the tool device for supplying power to drive the tool device.

The battery module includes a housing with a receiving cavity, at least one battery cell disposed within the receiving cavity, a power management module electrically connected to the at least one battery cell and at least one power interface electrically connected to the power management module and accessible from outside the housing.

The power management module is configured to control power flow between the at least one battery cell and the at least one power interface.

In some embodiments, the power management module includes an AC input terminal for connection to an AC power source, a power output terminal connected to a DC bus, and an auxiliary power output terminal.

The power management module is configured to convert AC power from the AC power source to DC power for the DC bus.

In some embodiments, the backup power source includes an energy storage unit, with its second input/output terminal connected to the first input/output terminal.

The charge of the energy storage unit serves as the charge of the backup power source.

In addition, a second switch unit is connected in series between the first input/output terminal and the second input/output terminal.

In addition, DC/DC converter has its input terminal connected to the second input/output terminal.

The battery management unit has its power terminal connected to both the output terminal of the DC/DC converter and the enable terminal.

When the charge of the energy storage unit is less than or equal to the critical value, the battery management unit is configured to detect the voltage at the output terminal of the DC/DC converter, and when the voltage is below a preset voltage threshold and the first switch unit is closed, control the second switch unit to close, allowing the energy storage unit to be charged through the DC bus.

In some embodiments, the backup power source further includes: a third switch unit, connected in series to the input terminal of the DC/DC converter.

The third switch unit serves as the startup switch for the energy storage system and is not closed simultaneously with the first switch unit.

The battery management unit is further configured to monitor the working state of the third switch unit: when the third switch unit is closed, send a startup signal to the power management module.

In some embodiments, a first diode is connected in series between the output terminal of the DC/DC converter and the enable terminal of the backup power source, with the anode of the first diode connected to the output terminal of the DC/DC converter and its cathode connected to the enable terminal of the backup power source.

The second diode is connected in series between the first switch unit and the enable terminal of the backup power source, with the anode of the second diode connected to one end of the first switch unit and its cathode connected to the enable terminal of the backup power source.

In some embodiments, the battery management unit is connected to the power management module through a digital signal port, used to feed back the emergency fault status signal of the backup power source to the power management module.

In some embodiments, the power management module further includes a photovoltaic input terminal, connected to a photovoltaic power source, and the power management module is further configured to convert the DC power from the photovoltaic power source and output it through the power output terminal and the first auxiliary power output terminal.

In some embodiments, the power management module further includes an AC/DC converter, with its input terminal serving as the AC input terminal, configured to convert AC power from the AC charging pile/grid to DC power output, a photovoltaic interface, with its input terminal serving as the photovoltaic input terminal, configured to convert and output the DC power from the photovoltaic power source, and an energy management unit, configured to control the operation of the AC/DC converter, the photovoltaic interface, and the power output module, as well as communicate and interact with the battery management unit of the backup power source.

In some embodiments, the gardening apparatus may also include a charging pile detection module, connected to both the power management module and the AC charging pile for communication, used to identify the output power of the AC charging pile.

The energy management unit is further configured to determine the AC input power of the AC/DC converter based on the maximum allowable current of the AC/DC converter and the maximum output current of the AC charging pile/grid.

In some embodiments, the gardening apparatus may also include an auxiliary power bus.

The power management module further includes a second auxiliary power output terminal, connected to the auxiliary power bus.

In some embodiments, the power output module includes a DC/AC inverter, with its input terminal connected to the DC bus and its output terminal used for connection to an external AC load, a fourth switch unit.

The enable terminal of the DC/AC inverter is connected to the auxiliary power bus through the fourth switch unit.

The power management module is further configured to control the fourth switch unit to cut off the AC output of the DC/AC inverter when the AC power output by the DC/AC inverter exceeds a preset power threshold.

In some embodiments, the gardening apparatus may also include a human-machine interaction module, communicatively connected to the power management module, used to display at least one of: charging information of the backup power source, charging information of the system and load, grid-connected/off-grid information of the system, fault information of the system, 4G signal of the system, and GPS signal of the system.

In some embodiments, the gardening apparatus may also include a backup power source including an input/output terminal, an enable terminal, and a first switch unit..

The input/output terminal is connected to the DC bus, and the enable terminal is connected to the auxiliary power output terminal through the first switch unit..

The backup power source is configured to supply power to the DC bus when its charge is above a critical value, and receive power from the DC bus when its charge is at or below the critical value.

In some embodiments, the gardening apparatus may also include a first charging socket electrically connected to the power management module and configured to charge a first garden tool at a first power level. a second charging socket electrically connected to the power management module and configured to charge a second garden tool at a second power level..

The first power level is greater than the second power level.

In some embodiments, the battery module further includes a cover installed on a top surface of the battery module, forming a storage compartment with the top surface, and multiple power module assemblies electrically connected to the battery module and fixed to the top surface within the storage compartment.

In some embodiments, the power management module includes a casing with at least a first side wall having a window, a power module including a circuit board and power devices, a heat dissipation module connected to the circuit board and installed on an inner side of the first side wall, and at least a portion of the heat dissipation module is exposed outside the casing through the window.

In some embodiments, the gardening apparatus may also include a charging system including a first power supply device, a second power supply device, and a charging device connected to either the first or second power supply device.

The charging device includes a plurality of serially connected transmission control modules, each transmission control module having a charging interface for connecting to a powered device and controlling the connection or disconnection of the powered device to the charging device.

In some embodiments, the battery module further includes a power module assembly detachably installed on at least a portion of the battery module's interface.

The power module assembly is configured to direct current along a first path from an external power supply device to the battery module when connected to the external power supply device and to direct current along a second path from the battery module to an external powered device when connected to the external powered device.

In some embodiments, the housing of the battery module includes a removable first window on a side wall of the housing and external output terminals set in the first window, with one end connected to the battery cell and another end connectable to an external power module assembly.

In a first state, the first window is connected to the housing to isolate the external output terminals from the exterior in a direction perpendicular to the first window

In a second state, the first window is at least partially separated from the housing, exposing the external output terminals to allow changing the connection relationship between the battery module and the external power module assembly.

In some embodiments, the battery module includes a temperature sensor for sending a wireless signal to alarm when a detected temperature is over a threshold.

### BRIEF DESCRIPTION OF DRAWINGS

Fig. 1 is a structural schematic diagram of a specific embodiment of an energy storage system provided by this application.
Fig. 2 is a circuit diagram of a specific embodiment of the power management module in an energy storage system provided by this application.
Fig. 3 is a circuit diagram of a specific embodiment of the backup power supply in an energy storage system provided by this application.
Fig. 4 is a circuit diagram of a specific embodiment of the power output module in an energy storage system provided by this application.
Fig. 5 is a circuit diagram of a specific embodiment of the human-machine interaction module in an energy storage system provided by this application.
Fig. 6 is a flow chart of a specific embodiment of a control method for an energy storage system provided by this application.
Fig. 7 is the first logic diagram of a specific embodiment of a control method for an energy storage system provided by this application.
Fig. 8 is the second logic diagram of a specific embodiment of a control method for an energy storage system provided by this application.
Fig. 9 is the third logic diagram of a specific embodiment of a control method for an energy storage system provided by this application.
Fig. 10 is the first logic diagram of a specific embodiment of the power replenishment strategy in the control method for an energy storage system provided by this application.
Fig. 11 is the second logic diagram of a specific embodiment of the power replenishment strategy in the control method for an energy storage system provided by this application.
Fig. 12 is a flow chart of a specific embodiment of a control method for an energy storage system provided by this application.
Fig. 13 is a three-dimensional view of the energy storage device provided by the embodiment of this invention.
Fig. 14 is another three-dimensional view from a different angle of the energy storage device provided by the embodiment of this invention.
Fig. 15 is a three-dimensional view of the battery module provided by the embodiment of this invention.
Fig. 16 is an exploded view of the battery module provided by the embodiment of this invention.
Fig. 17 is a top view of the battery module provided by the embodiment of this invention, with the cover plate hidden in the figure.
Fig. 18 is a three-dimensional view of the cover plate provided by the embodiment of this invention.
Fig. 19 is an exploded view of the installation structure of the power module assembly provided by the embodiment of this invention.
Fig. 20 is a combined structural schematic diagram of the power module assembly provided by the embodiment of this invention.
Fig. 21 is a top view of the combined structure of the power module assembly provided by the embodiment of this invention.
Fig. 22 is an A-A sectional view of Fig. 21.
Fig. 23 is an exploded view of the power module assembly provided by the embodiment of this invention.
Fig. 24 is an internal structural schematic diagram of one type of power module assembly provided by the embodiment of this invention.
Fig. 25 is an internal structural schematic diagram of another type of power module assembly provided by the embodiment of this invention.
Fig. 26 is a three-dimensional view of the power module provided by the embodiment of this invention.
Fig. 27 shows a functional block diagram of the charging system in one embodiment of this application.
Fig. 28 shows a structural schematic diagram of the mobile energy storage device in one embodiment of this application.
Fig. 29 shows a partial enlarged view of Fig. 28.
Fig. 30 shows a functional module block diagram of the communication control box in one embodiment of this application.
Fig. 31 shows a functional module block diagram of the transmission control module in one embodiment of this application.
Fig. 32 shows a functional module block diagram of the power-receiving device in one embodiment of this application.
Fig. 33 shows a three-dimensional view of the charging system of the energy storage device in this application's embodiment.
Fig. 34 shows a three-dimensional view of the first battery module in this application's embodiment.
Fig. 35 shows one exploded view of the first battery module in this application's embodiment.
Fig. 36 shows a front view of the first battery module in this application's embodiment, with the first window hidden in the figure.
Fig. 37 shows another exploded view of the first battery module in this application's embodiment.
Fig. 38 shows an exploded view of the installation structure of the first power module assembly in this application's embodiment.
Fig. 39 shows one design schematic of power transmission through the busbars in this application's embodiment.
Fig. 40 shows another design schematic of power transmission through the busbars in this application's embodiment.
Fig. 41 shows a third design schematic of power transmission through the busbars in this application's embodiment.
Fig. 42 shows a three-dimensional view of the combined structure of the power module assembly in this application's embodiment.
Fig. 43 shows a front view of the combined structure of the power module assembly in this application's embodiment.
Fig. 44 shows an exploded view of the power module assembly in this application's embodiment.

### DETAILED DESCRIPTION

First, it is necessary to explain that in order for those skilled in the art to better understand the present application, some relevant introduction to the technical background of the present application is provided.

Grid-connected refers to the behavior of an independent power generation system or small power system electrically connecting to an adjacent power system for power exchange. For example, the behavior of an energy storage system connecting to the power grid to obtain AC input power can be called grid-connected.

Off-grid refers to the behavior of an independent power generation system or small power system operating independently without exchanging power through connection with other power systems. For example, an independent photovoltaic power generation system or independent energy storage system supplying power externally.

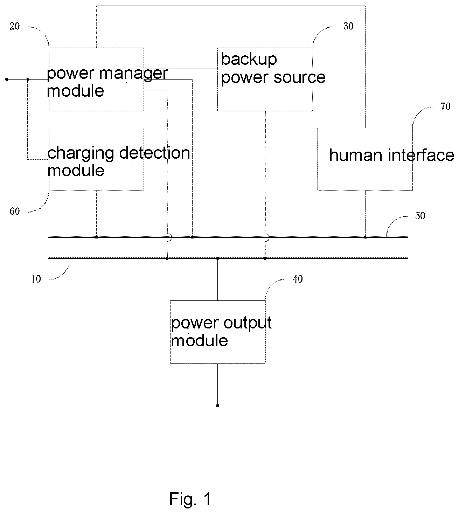

Referring to Fig. 1, this implementation provides an energy storage system, including a DC bus 10, a power management module 20, a backup power source 30, and a power output module 40.

The power management module 20 serves as the main control module of the energy storage system and is communicatively connected to the backup power source 30 and the power output module respectively. The power management module 20 includes an AC input terminal, a power output terminal, and a first auxiliary power output terminal 1#. The AC input terminal is used to connect to an AC charging pile/power grid, and the power output terminal is connected to the DC bus 10. The power management module 20 is used to convert the AC input from the AC charging pile/power grid to DC and transmit it to the DC bus 10 through the power output terminal. At the same time, the power management module 20 can also supply power to the enable terminal of the backup power source 30 through the first auxiliary power output terminal 1# to enable the battery management unit 35 of the backup power source 30 to work.

The backup power source 30 serves as a switchable module and includes a first input/output terminal, an enable terminal, and a first switch unit 31. The first input/output terminal is connected to the DC bus 10, and the backup power source 30 can supply power to the DC bus 10 or receive power from the DC bus 10 through the first input/output terminal. The enable terminal is connected to the first auxiliary power output terminal 1# of the power management module 20 through the first switch unit 31. By switching the working state of the first switch unit 31, when the charge of the backup power source 30 is higher than the critical value, power is supplied to the DC bus 10 through the first input/output terminal, and when the charge of the backup power source 30 is lower than or equal to the critical value, power is received from the DC bus 10 through the first input/output terminal.

The input terminal of the power output module 40 is mounted on the DC bus 10, and the output terminal of the power output module 40 is connected to an external load. The power output module 40 can obtain available power from the DC bus 10 according to the power requirements of the load and distribute it to the load.

In one embodiment, the energy storage system also includes an auxiliary power bus 50, used to provide working power for modules such as the power output module 40, charging pile detection module 60, and human-machine interaction module 70, ensuring that the corresponding modules of the system can work normally. The power management module 20 also includes a second auxiliary power output terminal, connected to the auxiliary power bus 50. A third auxiliary power output terminal can also be set on the backup power source 30, connected to the auxiliary power bus 50, so that power can be output to the auxiliary power bus 50 through the power management module 20 or the backup power source 30.

Specifically, in practical applications, when the system is grid-connected, the power management module 20 transmits power to the auxiliary power bus 50 through its second auxiliary power output terminal 2# to maintain the normal operation of other modules in the system. The power of the backup power source 30 can be used to supply power to the load without outputting power to the auxiliary power bus 50. When the system is off-grid, it relies on the backup power source 30 to transmit power to the auxiliary power bus 50 through its third auxiliary power output terminal, and then use the remaining power to supply the DC bus 10 for the load. By reasonably allocating the output power of the power management module 20 and the output power of the backup power source 30, the system can be powered up and work normally whether it is grid-connected or off-grid.

In this embodiment, the energy storage system uses a DC bus 10 and an auxiliary power bus 50 to transmit power. The module units in the system can be directly mounted on the DC bus 10 and the auxiliary power bus 50, making the wiring connection method simpler, reducing the wire harness impedance, and improving the system's loss, greatly improving the power conversion efficiency.

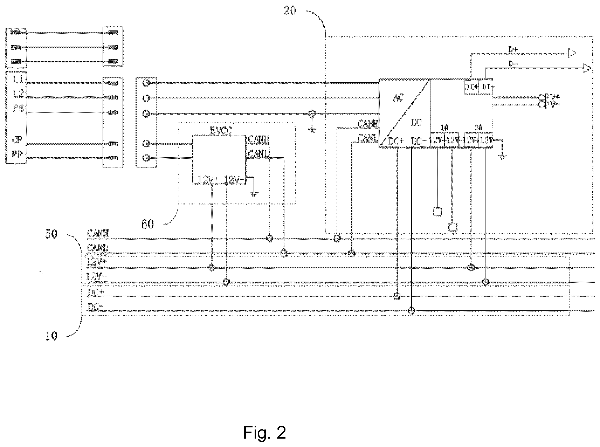

As shown in Fig. 2, the power management module 20 is an integrated unit, including an AC/DC converter, a photovoltaic interface, and an energy management unit. The energy management unit is connected to the AC/DC converter and the photovoltaic interface.

The input terminal of the AC/DC converter serves as the AC input terminal of the power management module 20, connected to the AC charging pile/power grid, used to convert the AC from the AC charging pile/power grid to DC and output it through the power output terminal, first auxiliary power output terminal 1#, and second auxiliary power output terminal 2# of the power management module 20.

The photovoltaic interface, with its input terminal serving as the photovoltaic input terminal PV+/PV- of the power management module 20, is used to connect to a photovoltaic power source and convert the DC from the photovoltaic power source, outputting it through the power output terminal, first auxiliary power output terminal 1#, and second auxiliary power output terminal 2# of the power management module 20.

When the system is grid-connected, the AC input power from the external charging pile or power grid can be prioritized to maintain the normal operation of the system, and the output power of the photovoltaic interface can serve as supplementary energy directly transmitted to the DC bus 10 for supply to the load. When the system is off-grid, the photovoltaic interface will prioritize transmitting the converted DC to the auxiliary power bus 50 through the second auxiliary power output terminal 2#, and then transmit the remaining energy to the DC bus 10, working with the backup power source 30 to supply power to the load.

The energy management unit, namely the Energy Management System (EMS), serves as the control unit of the power management module 20. It is connected to the AC/DC converter and the photovoltaic interface respectively, and also communicates with other module units in the system. It is used to control the operation of the AC/DC converter, photovoltaic interface, and power output module 40, as well as communicate and interact with the battery management unit 35 of the backup power source 30.

As shown in Fig. 2, in one embodiment, since the power required to start the battery management unit 35 is relatively large, while the power required to maintain other module units in the system is relatively small, two auxiliary power output terminals, the first auxiliary power output terminal 1# and the second auxiliary power output terminal 2#, are set on the power management module 20. The first auxiliary power output terminal 1# provides working power for the battery management unit 35 of the backup power source 30, while the second auxiliary power output terminal 2# provides working power for other module units mounted on the auxiliary power bus 50.

Naturally, the first auxiliary power output terminal 1# and the second auxiliary power output terminal 2# of the power management module 20 can also be integrated into one port, directly connected to the auxiliary power bus 50, and the battery management unit 35 of the backup power source 30 can obtain the voltage and current needed for normal operation from the auxiliary power bus 50.

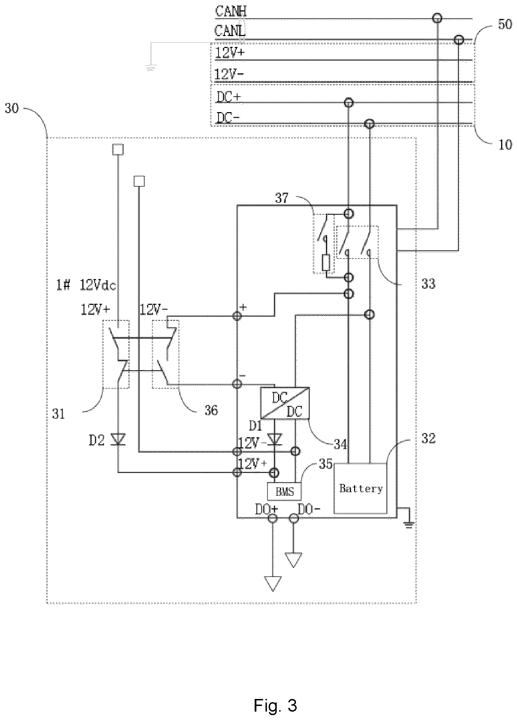

As shown in Fig. 3, in one embodiment, the backup power source 30 also includes an energy storage unit 32, a second switch unit 33, a DC/DC converter 34, and a battery management unit 35.

Among them, the first switch unit 31 serves as a charging switch and can be a mechanical switch or a soft switch, connected in series between the enable terminal of the backup power source 30 and the first auxiliary power output terminal 1# of the power management module 20. The energy storage unit 32 can be a battery pack used to store energy. The second input/output terminal of the energy storage unit 32 is connected to the first input/output terminal of the backup power source 30, where the charge of the energy storage unit is also the charge of the backup power source. The second switch unit 33 is connected in series between the second input/output terminal of the energy storage unit 32 and the first input/output terminal of the backup power source 30, used to allow or prohibit the energy storage unit 32 from supplying power to or receiving power from the DC bus 10. The DC/DC converter 34 serves as an internal DC conversion device of the backup power source 30, which can adjust the energy of the energy storage unit 32 to supply the battery management unit 35. The input terminal of the DC/DC converter 34 is connected to the second input/output terminal of the energy storage unit 32, and its output terminal is connected to the power terminal of the battery management unit 35. The power terminal of the battery management unit 35 is also connected to the enable terminal of the backup power source 30. The battery management unit 35, namely the Battery Management System (BMS), is used to control the operation of the first switch unit 31, the second switch unit 33, and the DC/DC converter 34, and also interacts with the energy management unit in the power management module 20 to transmit status information, etc.

When the charge of the energy storage unit 32 is lower than or equal to the critical value, the battery management unit 35 detects the voltage at the output terminal of the DC/DC converter 34, and when the voltage at the output terminal of the DC/DC converter 34 is lower than a preset voltage threshold and the first switch unit 31 is closed, it controls the second switch unit 33 to close, charging the energy storage unit 32 through the DC bus 10.

To prevent the first switch unit 31 from triggering charging by mistake, it can be stipulated that only when the charge of the energy storage unit 32 is lower than or equal to the critical value and the voltage at the output terminal of the DC/DC converter 34 is lower than the voltage threshold, the battery management unit 35 sends a charging signal to the power management module 20. After receiving the charging signal, the power management module 20 further confirms whether to charge through the human-machine interaction module 70 by the user and feeds back the user's confirmation information to the battery management unit 35.

When the user confirms charging, the battery management unit 35 first controls the pre-charge unit 37 to work, then controls the second switch unit 33 to close, allowing the energy storage unit 32 to obtain energy from the DC bus 10 for charging. When the user confirms not to charge, the battery management unit 35 can disconnect the first switch unit 31, or send a signal to the power management module 20, and the power management module 20 reminds the user to manually disconnect the first switch unit 31 through the human-machine interaction module 70.

As shown in Fig. 3, in one embodiment, the backup power source 30 also includes a third switch unit 36. The third switch unit 36 is connected in series to the input terminal of the DC/DC converter 34 and is not closed simultaneously with the first switch unit 31. That is, the first switch unit 31 and the third switch unit 36 are in a linked state. By linking the first switch unit 31 and the third switch unit 36, the power supply source of the battery management unit 35 can be switched. When the third switch unit 36 is closed, the energy storage unit 32 supplies power to the battery management unit 35. When the first switch unit 31 is closed, the first auxiliary power output terminal 1# of the power management module 20 supplies power to the battery management unit 35.

The third switch unit 36 also serves as the startup switch for the energy storage system. The battery management unit 35 can monitor the working state of the third switch unit 36: when the third switch unit 36 is closed, it sends a startup signal to the power management module 20. The power management module 20, based on the startup signal, supplies power to the auxiliary power bus 50 through the second auxiliary power output terminal 2#, controlling each module unit in the energy storage system to power up and work.

It should be noted that the first switch unit 31 and the third switch unit 36 can be manual switch buttons or electrically controlled buttons, which can be set according to actual needs.

As shown in Fig. 3, in one embodiment, the backup power source 30 also includes a pre-charge unit 37, connected in parallel with the second switch unit 33, used to pre-charge the battery unit 32 before charging, ensuring the stability and safety of the energy storage unit 32 during charging.

It should be noted that the backup power source 30 can also include insulation detection units, leakage detection units, heating units, etc., used to assist the normal operation of the backup power source 30.

In one embodiment, the energy storage system also includes a charging pile detection module 60, namely the EVCC module. When the power management module 20 is connected to the AC charging pile, the communication port of the charging pile detection module 60 is also connected to the CP interface and PP interface of the AC charging pile respectively, communicating with the AC charging pile to identify the connection status between the power management module 20 and the AC charging pile. If an abnormal charging pile insertion is detected, the charging pile detection module 60 promptly feeds back the information to the power management module 20, and the power management module 20 alerts the user through the human-machine interaction module 70, prompting the user to reconnect the AC charging pile.

After detecting that the AC charging pile insertion is normal, the charging pile detection module 60 obtains the maximum output current of the AC charging pile and feeds it back to the energy management unit in the power management module 20 through the CAN bus. The energy management unit limits the AC input power of the AC/DC converter based on the maximum output current of the AC charging pile and the maximum allowable current of the AC/DC converter in the power management module 20, making the current value corresponding to the maximum AC input power of the AC/DC converter the minimum of the maximum output current of the AC charging pile and the maximum allowable current of the AC/DC converter.

Similarly, when the power management module 20 is connected to the power grid, the energy management unit limits the AC input power of the AC/DC converter based on the maximum output current of the power grid and the maximum allowable current of the AC/DC converter, making the current value corresponding to the maximum AC input power of the AC/DC converter the minimum of the maximum output current of the power grid and the maximum allowable current of the AC/DC converter, then allowing the power input from the power grid, effectively protecting the safety of the system.

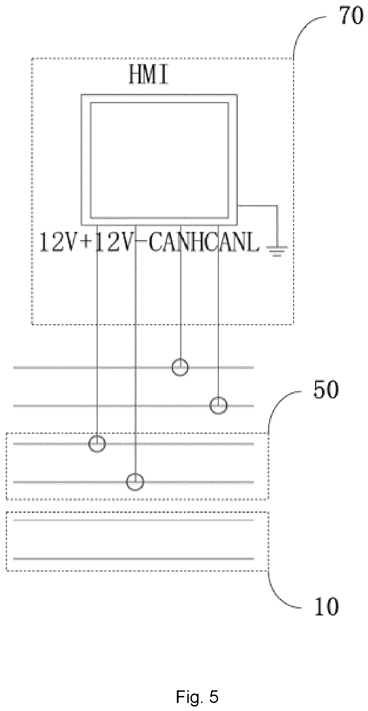

In one embodiment, as shown in Fig. 5, the energy storage system also includes a human-machine interaction module 70, which can adopt an HMI human-machine interface and can be set according to actual needs to achieve intelligent interaction between the system and users. For example, it can display one or more pieces of information such as the charge and available power of the backup power source 30 and other charging information, charging information of the system and load, grid-connected/off-grid status of the system, fault information of the system, geographic location, 3G signal of the system, 4G signal of the system, 5G signal of the system, and GPS signal of the system.

In one embodiment, the energy storage system also includes a communication bus, including CAN-H bus and CAN-L bus, using CAN bus communication protocol. The power management module 20, backup power source 30, power output module 40, charging pile detection module 60, and human-machine interaction module 70 are connected through the communication bus to achieve communication interaction.

In one embodiment, long-distance communication modules or short-distance wireless communication modules can be integrated into the human-machine interaction module 70. Among them, long-distance communication modules can be 3G modules, 4G modules, 5G modules, 6G modules, GPS modules, and other wireless modules; short-distance wireless communication modules can be Bluetooth modules, WiFi modules, NFC, and other wireless modules.

As shown in Fig. 3, in one embodiment, the energy storage system also has anti-backflow diodes set up, namely the first diode D1 and the second diode D2. The anode of the first diode D1 is connected to the output terminal of the DC/DC converter 34, and its cathode is connected to the enable terminal of the backup power source 30, using the unidirectional conduction of the diode to prevent the 12V power input through the enable terminal from flowing back to the output terminal of the DC/DC converter 34. The anode of the second diode D2 is connected to one end of the first switch unit 31, and its cathode is connected to the enable terminal of the backup power source 30, using the unidirectional conduction of the diode to prevent the 12V power output by the DC/DC converter 34 from flowing back to the circuit where the first switch unit 31 is located, effectively ensuring the stability and safety of the energy storage system.

As shown in Fig. 2 and Fig. 3, the power management module 20 and the backup power source 30 communicate through a CAN bus, but the CAN communication time is relatively long. When an emergency fault occurs in the backup power source 30, the power management module 20 cannot receive the signal sent by the backup power source 30 in time, resulting in the power management module 20 being unable to respond promptly. Based on this, the digital signal terminal DO of the backup power source 30 is connected to the digital signal terminal DI of the power management module 20 for physical signal communication. This is used to transmit emergency fault signals to the power management module 20 through the digital signal terminals DI/DO when an emergency fault occurs in the backup power source 30, utilizing the fast speed and high reliability of the digital signal terminals DI/DO to ensure the safety of the energy storage system.

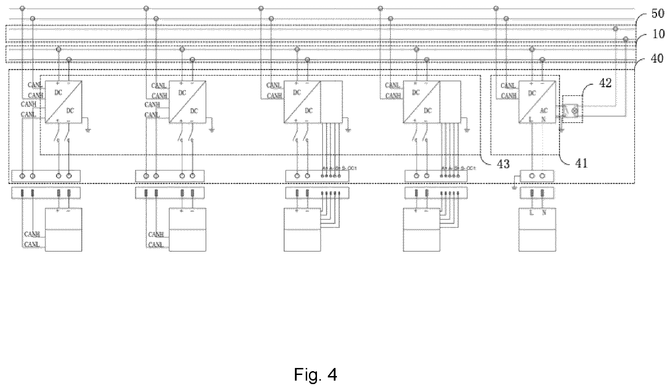

As shown in Fig. 4, in one embodiment, the power output module 40 is used to convert the available power on the DC bus 10 into the voltage and current required by the load. Due to the existence of AC loads and DC loads, the power output module 40 can be divided into a DC output unit 43 and an AC output unit 41 to correspond to DC loads and AC loads respectively.

As shown in Fig. 4, the DC output unit 43 can include multiple DC/DC converters, with the output terminals of the DC/DC converters used to connect various DC loads; the AC output unit 41 can include one or more DC/AC inverters, with the output terminals of the DC/AC inverters used to connect AC loads.

Specifically, in practical applications, the output terminals of the DC/DC converters in the DC output unit 43 can be formed as plug-in ports, which can be used to connect DC loads such as electric garden tools. The DC/DC converters and DC loads also communicate through the CAN bus, which can obtain the power requirements of the DC loads and the charging information of the DC loads, and feed this back to the power management module 20. The power management module 20 can display the charging status of the DC loads through the human-machine interaction module 70 based on the charging information of the DC loads.

Furthermore, the output terminals of the DC/DC converters in the DC output unit 43 can also be formed as charging guns, which can be used to connect DC loads such as electric vehicles with charging gun interfaces compatible with the charging guns. Therefore, the output terminals of the DC/DC converters can also integrate multiple wire harness interfaces such as communication interfaces, power supply interfaces, and auxiliary power supply interfaces. Similarly, the DC/DC converters can obtain the power requirements of the DC loads and the charging information of the DC loads through the communication interfaces, and feed this back to the power management module 20.

It should be noted that the output terminals of the DC/DC converters in the DC output unit usually have relays for disconnecting DC loads, and the DC/DC converters are also used to detect the output voltage and current and promptly feed this back to the power management module 20, which uniformly schedules available power according to the control strategy.

In addition, the output terminals of the DC/AC inverters in the AC output unit 41 can be formed as sockets for connecting AC loads. It needs to be supplemented here that in the energy storage system, AC output generally has no power limitation and no disconnection devices. Therefore, the AC output of the energy storage system is easily affected by AC loads, causing AC loads to obtain energy without limitation, thus leading to insufficient available power in the energy storage system to support the needs of DC loads.

Based on this, as shown in Fig. 4, the power output module 40 also includes a fourth switch unit 42, with one end of the fourth switch unit 42 connected to the auxiliary power bus 50 and the other end connected to the enable terminal of the DC/AC inverter in the AC output unit 41. Specifically, the fourth switch unit 42 can be connected to the MOS/IGBT of the DC/AC inverter, or connected to the output terminal of the DC/AC inverter through a MOS/IGBT. When the fourth switch unit 42 is closed, the high-level signal on the auxiliary power bus 50 cuts off the MOS/IGBT, disconnecting the internal circuit of the DC/AC inverter, thereby disconnecting the AC output of the system. By setting up the fourth switch unit 42, when not supplying power to AC loads, the power supply line between the auxiliary power bus and the AC output unit 41 can be cut off, making the AC power supply terminal in a non-energized state, eliminating the safety hazards brought by the energized AC power supply terminal, and also making the loss of the AC output unit 41 zero when not supplying power to AC loads, reducing energy consumption and saving energy.

Therefore, the DC/AC inverter can also be used to detect the output voltage and current and promptly feed this back to the power management module 20. When the AC output power of the DC/AC inverter exceeds a preset power threshold, the power management module 20 controls the fourth switch unit 42 to close, cutting off the AC output. At the same time, the power threshold of the AC output can be limited, and the difference between the available power on the DC bus 10 and the limited power threshold of the AC output can be used as the power that can be allocated to DC loads, thus simplifying the calculation method of available power allocation.

It should be noted that the energy storage system in this embodiment can be fixed or mobile. When the system is grid-connected, it is fixed relative to the power grid or AC charging pile. When the system is off-grid, the energy storage system can be moved to any location, specifically according to the location of the load to be charged, to supplement energy to the load in a timely manner.

In one embodiment, the energy storage system also includes an emergency stop module, connected to both the power management module 20 and the power output module 40. When the emergency stop module is activated, it disconnects the connection between the power output module 40 and the load within a first preset time to avoid harm to the user. At the same time, after the power output module 40 is disconnected from the load, it feeds back the corresponding signal to the power management module 20. After receiving the feedback signal from the power output module 40, the power management module 20 controls the backup power source 30 to stop supplying energy to the DC bus, and itself stops supplying energy to the DC bus, and disconnects from the AC charging pile/power grid. If the power management module 20 does not receive the feedback signal from the power output module 40 within a second preset time, it will also control itself and the backup power source 30 to stop working accordingly. The first preset time is usually 50ms-150ms, preferably 100ms, and the second preset time is usually 2s-5s, preferably 3s-4s.

In addition, the emergency stop module can be a mechanical switch button, set on the power output of the system. When the user manually activates it, it immediately completes the above operations, thus ensuring the safety of the system and the user.

It should be noted that in the energy storage system of this application, whether grid-connected or off-grid, when the charge of the backup power source 30 is lower than or equal to the critical value, the system will stop working and disconnect the load connection. Among them, when the system is grid-connected, if the charge of the backup power source 30 is lower than or equal to the critical value, the backup power source 30 can be charged according to the AC input power of the AC charging pile or power grid, and after the backup power source 30 is fully charged, it can continue to supply power to the load.

In one application scenario, when the load is connected to the system to obtain energy, the third switch unit 36 can be closed to start up the energy storage system. When the third switch unit 36 is closed, the energy storage unit 32 can supply power to the battery management unit 35 through the DC/DC converter 34. The battery management unit 35 starts up normally and detects the working state of the third switch unit 36, sends a startup signal to the power management module 20 through the CAN bus, and the power management module 20, based on the startup signal, supplies power to the auxiliary power bus 50 through the second auxiliary power output terminal 2#, controlling each module unit in the energy storage system to power up and work. At the same moment, the battery management unit 35 also controls the second switch unit 33 to close, and the energy storage unit 32 supplies energy to the DC bus 10 through the first input/output terminal of the backup power source 30. The power management module 20 controls the power output module 40 to allocate the available power on the DC bus 10 to the load.

As the system continuously supplies energy to the load, the charge in the energy storage unit 32 gradually decreases. When the charge of the energy storage unit 32 is lower than or equal to the critical value, and the system is grid-connected, the first switch unit 31 can be closed to charge the energy storage unit 32. After the first switch unit 31 is closed, the power supply of the battery management unit 35 is switched from the energy storage unit 32 to the power management module 20. After the first switch unit 31 is closed, the power management module 20 can output 12V power to the enable terminal of the backup power source 30 through the first auxiliary power output terminal 1# to supply power to the battery management unit 35, avoiding the situation where the energy storage unit 32 cannot supply power to the battery management unit 35 when switched to charging, causing the battery management unit 35 to stop working and unable to complete the charging operation. It should be noted that the first switch unit 31 can be closed manually or controlled by the battery management unit 35.

In another application scenario, when the energy storage system has not been used for a long time and the charge of the backup power source 30 is depleted, the system can be connected to an AC charging pile or power grid to make the system grid-connected, and the first switch unit 31 can be closed to start the battery management unit 35, so that subsequent charging operations can be carried out.

In summary, the energy storage system of this application is a new type of energy storage system architecture that can freely choose to run grid-connected or off-grid to supply energy to the load. At the same time, under grid-connected operation, the backup power source in the system can be charged in time, avoiding insufficient energy when the system runs off-grid and unable to work normally. Furthermore, the system includes a DC bus, an auxiliary power bus, and a communication bus, simplifying the circuit structure, greatly improving the working efficiency of the system, and reducing losses. In addition, the system limits the AC output power, avoiding unlimited demand from AC loads, making the system reasonably allocate available power according to DC loads and AC loads.

The interaction between the energy storage system of this application and users is more intelligent, able to effectively display different information of the system, respond to different states of the system, and facilitate user operation.

Therefore, the energy storage system of this application has good stability, high reliability, and can achieve different power supply methods according to corresponding control strategies, which is of great significance.

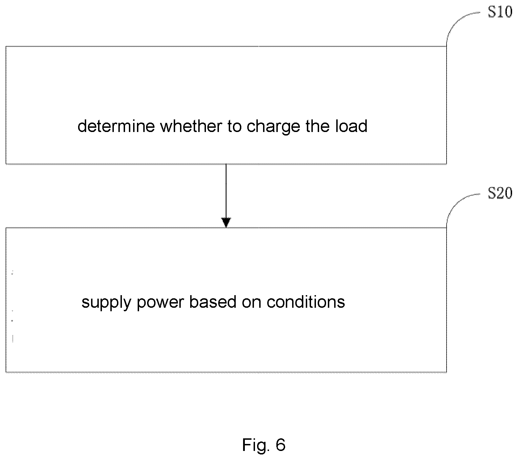

Referring to Fig. 6, this application also provides a control method for an energy storage system, including:

Step S10, when the system is grid-connected, judge whether to supply power to the connected load according to the charge (SOC) of the backup power source:

Step S20, if the charge of the backup power source is higher than the critical value, then supply power to the load according to the AC input power of the system and the output power of the backup power source, following a preset allocation strategy.

If the charge of the backup power source is lower than or equal to the critical value, then charge the backup power source until its charge exceeds a preset value, and then supply power to the load according to the AC input power of the system and the output power of the backup power source, following the preset allocation strategy.

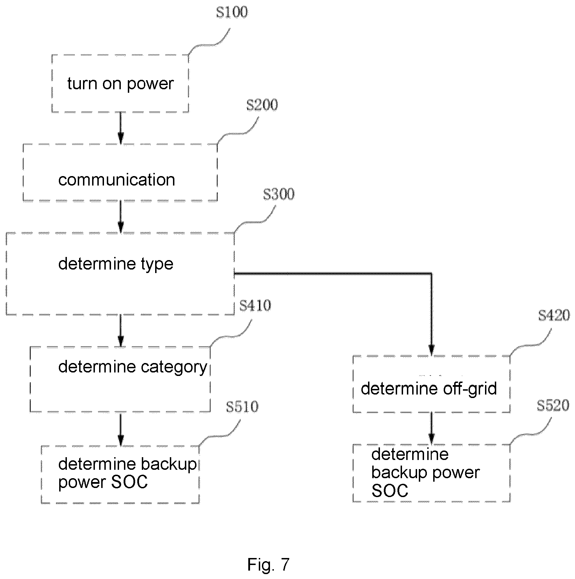

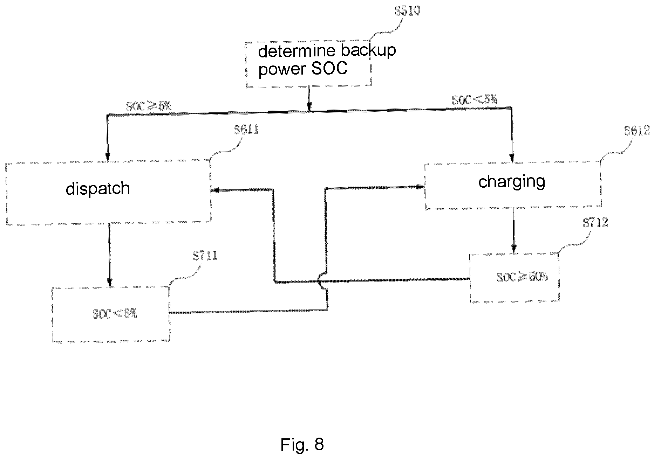

Specifically, as shown in Fig. 7 and Fig. 8, after the system's startup switch is closed, the system powers up and begins normal operation. The power management module interacts with the backup power source and the power output module to obtain the output power of the backup power source and the power request of the load.

Next, identify whether the system's operation mode is grid-connected or off-grid, and when the system is grid-connected, judge whether to supply power to the connected load according to the charge of the backup power source.

When the system is grid-connected, the power management module identifies that the system is connected to an AC charging pile or power grid and limits the AC input power of the system. If the system is connected to an AC charging pile, the AC input power of the system is determined based on the maximum allowable current of the AC/DC converter in the power management module and the maximum output current of the AC charging pile. If the system is connected to the power grid, the AC input power of the system is determined based on the maximum allowable current of the AC/DC converter in the power management module and the maximum output current of the power grid.

In practical applications, when the system is connected to an AC charging pile, the charging pile detection module will identify the plug-in status of the AC charging pile. When the plug-in of the AC charging pile is normal, the charging pile detection module communicates with the AC charging pile to obtain the maximum output current of the AC charging pile and feeds it back to the power management module. When the plug-in of the AC charging pile is abnormal, the charging pile detection module feeds back the corresponding signal to the power management module, and the power management module promptly reminds the user to reconnect or check if the AC charging pile is faulty through the human-machine interaction module. In addition, when the system finishes charging the load, the power management module can disconnect the power transmission circuit with the AC charging pile through the charging pile detection module, and then remind the user to disconnect the system from the AC charging pile.

It should be noted that under grid-connected operation of the system, to maximize the satisfaction of the load's power demand, the output power of the AC/DC converter in the power management module is calculated from the AC input power of the system, and the sum of the calculated output power of the AC/DC converter and the output power of the backup power source is taken as the output power of the system, i.e., the available power on the DC bus. Therefore, when the charge of the backup power source is lower than or equal to the critical value, it is immediately charged, and the connection between the power output module and the load is cut off at this time. After the backup power source is fully charged, power supply to the load continues. At the same time, keeping the charge of the backup power source above the critical value can also effectively avoid the problem of insufficient energy when the system runs off-grid.

In addition, in this embodiment, when the system supplies power to the load, it prioritizes meeting the needs of AC loads, and then allocates the remaining available power to various DC loads. Those skilled in the art can make modifications and refinements to the embodiments of this application without departing from the spirit of this application, which still fall within the scope of this patent application.

Therefore, when the charge of the backup power source is higher than the critical value, judge based on the output power of the system and the power request of AC loads:

If the output power of the system is less than the power request of AC loads, control the system to power off.

If the output power of the system is greater than or equal to the power request of AC loads, then prioritize supplying the output power of the system to AC loads, and allocate the remaining output power of the system to DC loads.

When allocating the remaining output power of the system to DC loads, it is necessary to judge whether the remaining output power of the system can meet the needs of all DC loads. If the remaining output power of the system is less than the power request of DC loads, then supply the remaining output power of the system to DC loads according to the preset allocation strategy. If the remaining output power of the system is greater than or equal to the power request of DC loads, then allocate the remaining output power of the system according to the needs of each DC load.

Specifically, in applications, for example, allocation can be made according to the power weight required by DC loads. Suppose the remaining output power of the system is 10KW, the power required by the first DC load is 6KW, the power required by the second DC load is 8KW, and the power required by the third DC load is 6KW. Therefore, the final actual power obtained by the first DC load is 3KW, the final actual power obtained by the second DC load is 4KW, and the final actual power obtained by the third DC load is 3KW. Or, allocation can be made according to the priority of DC loads, for example, first supply power to the first DC load, and after the power supply to the first DC load is completed, then supply power to the second DC load, and so on.

It should be noted that the said allocation strategy is not limited to the above methods. Therefore, the choice of an appropriate allocation strategy can be determined according to actual needs to meet the needs of the load.

In one embodiment, if the remaining output power of the system is greater than or equal to the power request of DC loads, then further detect the output power of the AC/DC converter. When the output power of the AC/DC converter can meet the needs of all loads, i.e., the difference between the output power of the AC/DC converter and the power request of AC loads is greater than the power request of DC loads, then the excess output power of the AC/DC converter can be used to charge the backup power source until the charge of the backup power source reaches 100%. When the output power of the AC/DC converter cannot meet the needs of all loads, i.e., the difference between the output power of the AC/DC converter and the power request of AC loads is less than or equal to the power request of DC loads, then the output power of the AC/DC converter and the output power of the backup power source are jointly supplied to DC loads to meet the needs of DC loads.

At the same time, when the output power of the backup power source is supplied to the load, the charge of the backup power source will also decrease accordingly. When its charge is lower than or equal to the critical value, disconnect the charging circuit between the system and the load, and charge the backup power source. After charging is completed, reconnect the charging circuit between the system and the load, and continue to supply power to the load.

When the system is running off-grid, due to no external power input, when the charge of the backup power source is lower than or equal to the critical value, the system can only stop working. Specifically, when the system is off-grid, judge whether to supply power to the connected load according to the charge of the backup power source: if the charge of the backup power source is higher than the critical value, then supply power to the load according to the output power of the backup power source, following the preset allocation strategy. If the charge of the backup power source is lower than or equal to the critical value, then control the system to power off.

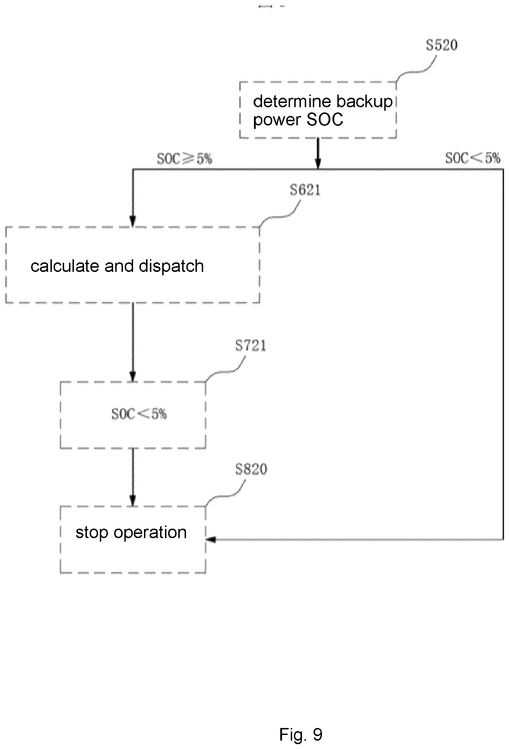

As shown in Fig. 7 and Fig. 9, when the charge of the backup power source is higher than the critical value, at this time the output power of the backup power source is the output power of the system. Judge based on the output power of the backup power source and the power request of AC loads:

If the output power of the backup power source is less than the power request of AC loads, control the system to power off.

If the output power of the backup power source is greater than or equal to the power request of AC loads, then prioritize supplying the output power of the backup power source to AC loads, and allocate the remaining output power of the backup power source to DC loads.

Among them, check whether the remaining output power of the backup power source can meet the needs of all DC loads. Similarly, if the remaining output power of the backup power source is less than the power request of DC loads, then supply the remaining output power of the backup power source to DC loads according to the allocation strategy. If the remaining output power of the backup power source is greater than or equal to the power request of DC loads, then allocate the remaining output power of the backup power source according to the needs of each DC load.

At the same time, as the energy stored in the backup power source is supplied to the load, the charge of the backup power source decreases accordingly. When its charge is lower than or equal to the critical value, and there is no external power input to charge the backup power source, the system can only stop working and disconnect the charging circuit between the system and the load.

It should be noted that the system itself also includes the input of photovoltaic DC power, but in practical applications, due to the small and unstable power of photovoltaic DC, it is not included in the power distribution of the system. In actual application scenarios, photovoltaic DC power can play an auxiliary role, supplying power to the load together with the AC input of the system and the energy stored in the backup power source to meet the needs of the load.

In addition, the critical value and preset value of the charge can be adjusted according to actual situations, not limited to what is described in this embodiment.

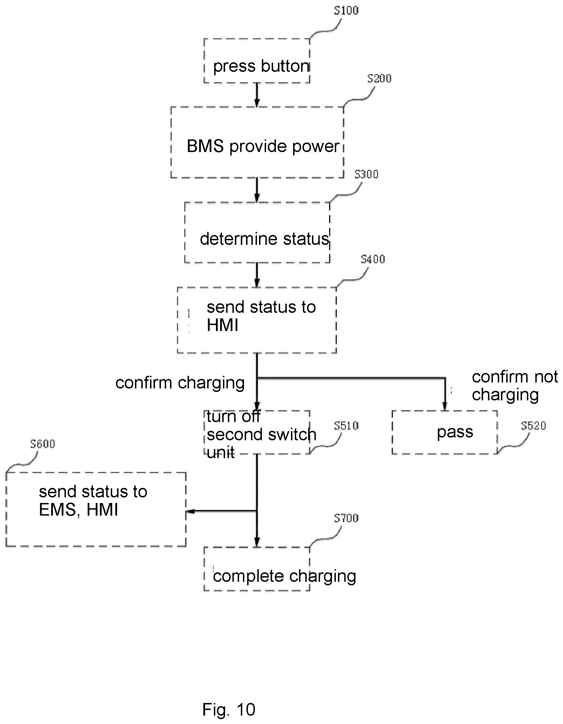

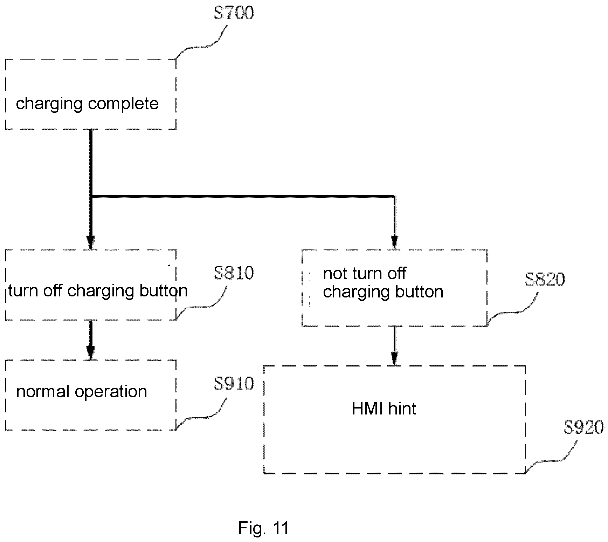

In a specific embodiment, as shown in Fig. 10 and Fig. 11, it also includes a method for charging the backup power source. Specifically, when the charge of the backup power source is lower than or equal to the critical value, the first switch unit can be controlled to close to provide working voltage and current to the enable terminal of the backup power source, so that the battery management unit of the backup power source can work normally.

At the same time, after the first switch unit is closed, the battery management unit starts up and identifies the charge of the backup power source, and also detects the voltage at the output terminal of the DC/DC converter in the backup power source. When the charge of the backup power source is lower than or equal to the critical value, and the voltage at the output terminal of the DC/DC converter in the backup power source is lower than the preset voltage threshold, the battery management unit sends a charging signal to the power management module.

The power management module, based on the charging signal from the battery management unit, sends charging confirmation information to the human-machine interaction module for the user to further confirm whether to charge. And the power management module feeds back the user's charging confirmation information to the battery management unit.

When the user confirms charging, the battery management unit controls the second switch unit and the pre-charge unit in the backup power source to work for charging until the charge of the backup power source exceeds the preset value.

When the user confirms not to charge, the battery management unit does not act, and controls the first switch unit to disconnect, or controls the human-machine interaction module through the power management module to remind the user to manually disconnect the first switch unit.

In addition, after charging is completed, if the first switch unit is not disconnected in time, the battery management unit sends a charging completion signal to the power management module, and the power management module reminds the user to disconnect the first switch unit through the human-machine interaction module.

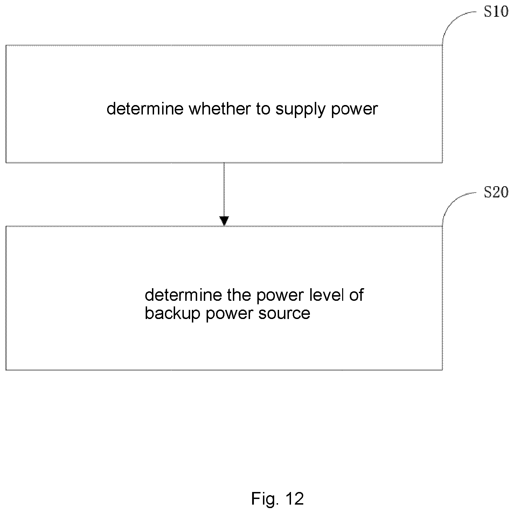

Referring to Fig. 12, this application also provides a control method for an energy storage system, including:

Step S10, when the system is grid-connected, judge whether to supply power to the connected load according to the charge (SOC) of the backup power source:

Step S20, if the charge of the backup power source is higher than the critical value, then supply power to the load according to the output power of the backup power source, following the preset allocation strategy;

If the charge of the backup power source is lower than or equal to the critical value, then control the system to power off.

There are multiple gardening apparatuses used in various tasks. In some embodiments, the gardening apparatus includes a tool device and a battery module. The tool device may be of different types, such as a lawn mower, a leaf blower, a sprayer, a hedge trimmer, or a string trimmer, that needs power supply from the battery module.

Lawn mowers are essential gardening tools used for cutting and maintaining grass at a desired height. Battery-powered lawn mowers have gained popularity due to their quiet operation, reduced emissions, and ease of use compared to traditional gas-powered models. These mowers typically require a high-capacity battery module to ensure sufficient runtime for larger lawn areas.

Leaf blowers are versatile tools used for clearing leaves, debris, and grass clippings from lawns, driveways, and pathways. Battery-operated leaf blowers offer the advantage of cordless operation, allowing users to move freely around the garden without being tethered to a power outlet. The battery module for leaf blowers must provide enough power to generate adequate air flow for effective clearing.

Sprayers are crucial for applying fertilizers, pesticides, and herbicides in gardens and agricultural settings. Battery-powered sprayers eliminate the need for manual pumping, making the application process more efficient and less labor-intensive. The battery module for sprayers must be capable of maintaining consistent pressure throughout the spraying operation.

Hedge trimmers and string trimmers (also known as weed whackers) are indispensable for maintaining the aesthetics of gardens and lawns. Battery-powered versions of these tools offer improved maneuverability and reduced noise compared to their gas-powered counterparts. The battery module for these devices must provide sufficient power for extended use, as trimming tasks often require continuous operation for prolonged periods.

Please also note that the invention may be used in devices other than gardening devices, for example, portable electronic devices, outdoor lighting systems, and mobile power stations. When these devices need a battery module and other features mentioned below, the principles of the present invention can be applied to enhance their functionality and efficiency.

Portable electronic devices such as smartphones, tablets, and laptops often require charging in outdoor settings where access to traditional power sources is limited. A battery module with advanced power management capabilities can serve as a reliable portable charger for these devices. Outdoor lighting systems, including camping lanterns, trail markers, and temporary work lights, benefit from durable and long-lasting battery modules to provide illumination in remote locations. Mobile power stations, used for powering various tools and appliances during outdoor activities or emergency situations, rely heavily on efficient battery modules to store and distribute energy effectively. Additionally, electric bicycles and personal mobility devices increasingly depend on sophisticated battery systems for extended range and performance. These non-gardening applications demonstrate the versatility and broad applicability of the battery module and power management features described in this invention.

It should be noted that the illustrations provided in the following embodiments are only intended to explain the basic concept of this invention in a schematic way. Therefore, the illustrations only show components related to this invention rather than being drawn according to the actual number, shape, and size of components during implementation. The actual form, quantity, and proportion of each component during implementation can be arbitrarily changed, and the layout of components may be more complex.

An embodiment of this embodiment provides an energy storage device with a lower center of gravity, which can be stably installed on a carrier. All electrical components of the energy storage device are encapsulated in independent sealed chambers, providing good dust and water resistance, suitable for outdoor use, and capable of charging garden tools such as lawn mowers, thus improving the endurance of garden tools. The following will explain the technical solution of this embodiment in detail in combination with specific embodiments.

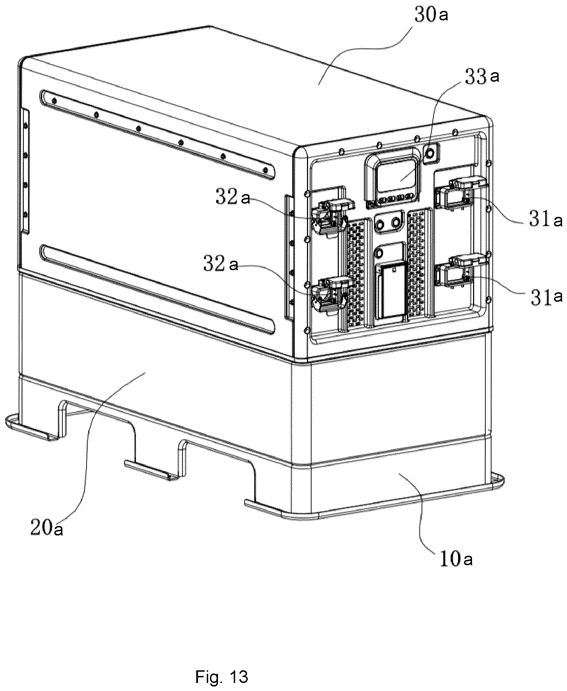

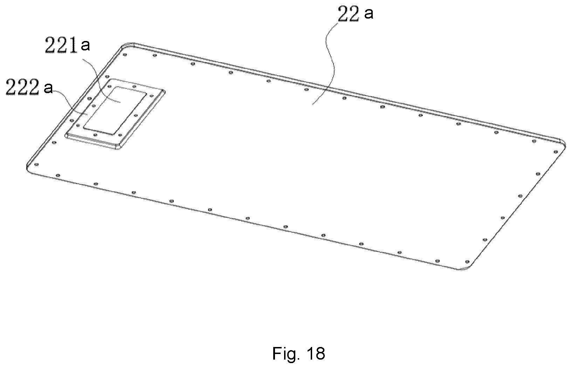

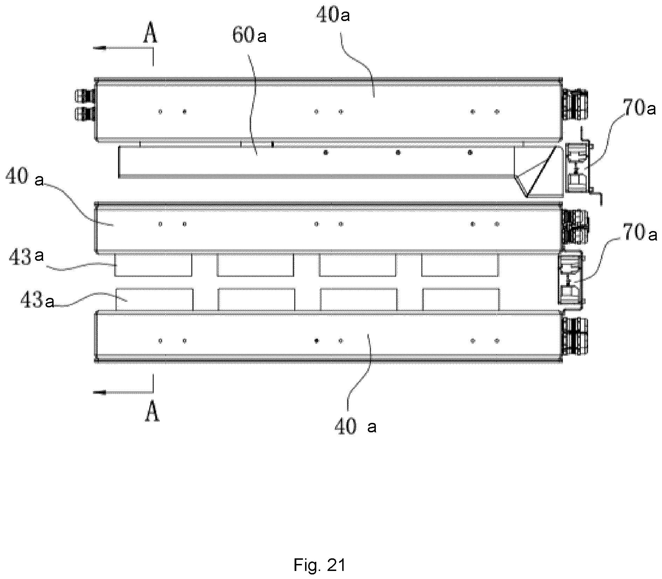

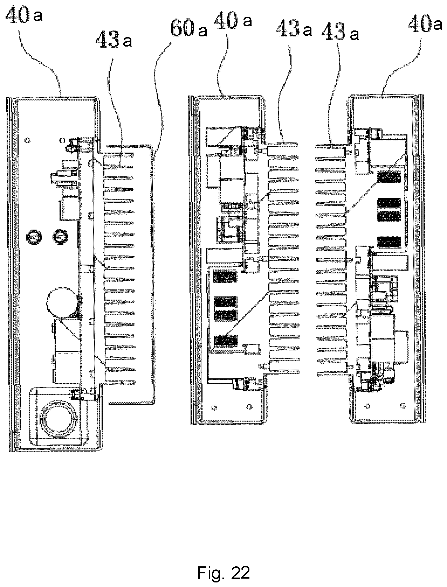

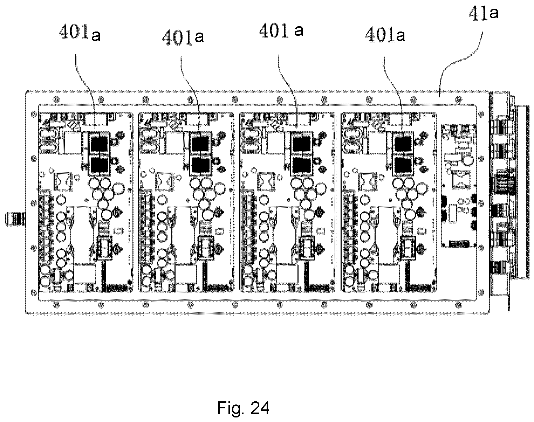

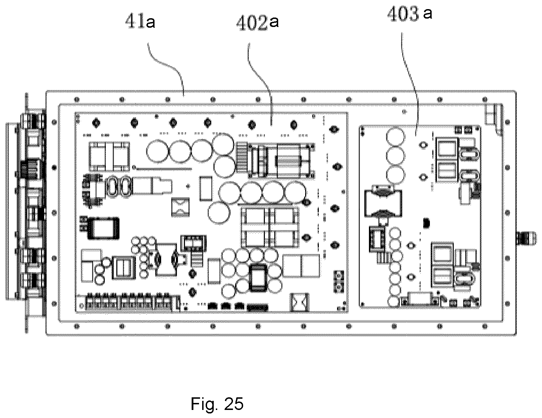

Referring to Fig. 13-26, the energy storage device provided by the embodiment of this embodiment includes a battery module 20a, a cover shell 30a, power module assemblies 40a, a first charging socket, and a second charging socket. The cover shell 30a is installed on the top surface of the battery module 20a, forming a storage cavity with the top surface of the battery module 20a. Multiple power module assemblies 40a are electrically connected to the battery module 20a. Each power module assembly 40a is contained within the storage cavity and fixedly connected to the top surface of the battery module 20a, i.e., the power module assemblies 40a and the battery module 20a are arranged vertically. The first charging socket is electrically connected to the power module assemblies 40a and installed on the outer wall of the cover shell 30a. The first charging socket charges the first garden tool at a first power level. The second charging socket is electrically connected to the power module assemblies 40a and installed on the outer wall of the cover shell 30a. The second charging socket charges the second garden tool at a second power level. Of course, in other embodiments, the cover shell 30a can be installed on the side of the battery module 20a, forming a storage cavity with the side of the battery module 20a, and the power module assemblies 40a are contained within this storage cavity, i.e., the battery module 20a and the power module assemblies 40a are arranged horizontally.

In a specific embodiment, the first charging socket can include, for example, a vehicle charging socket 31a, and the second charging socket can include, for example, an expansion socket 32a. The vehicle charging socket 31a can charge non-road garden vehicles such as ZTR, while the expansion socket 32a can connect to a charging box, which can charge the battery packs of garden tools such as blowers. The specific output power of the vehicle charging socket 31a and the expansion socket 32a can be determined according to the power requirements of external devices. For example, the first power level can be greater than 4KW, and the second power level can be less than 4KW. The energy density of the energy storage device can be greater than 30Wh/Kg, or the energy density of the energy storage device can be greater than 40Wh/Kg and less than 70Wh/Kg. The charge of the energy storage device is greater than 10000Wh. In a specific embodiment, the power of the vehicle charging socket 31a can be 6KW, and the power of the expansion socket 32a can be 2KW. An AC charging socket 34a for connecting to the AC power grid or a photovoltaic charging socket 35a for connecting to a photovoltaic system can also be set on the cover shell 30a to charge the battery module.

In some other embodiments, the number and types of sockets can be increased or decreased according to actual needs. For example, it can also include TYPE-A interface and/or TYPE-C interface, both of which are electrically connected to the power module assemblies 40a to receive DC power converted by the power module assemblies 40a. When the TYPE-A interface and/or TYPE-C interface is connected to a powered device, it can charge the powered device. The aforementioned powered device can be a mobile phone or tablet, or a battery pack with TYPE-A interface and/or TYPE-C interface, or an adapter with TYPE-A interface and/or TYPE-C interface, or an electric tool with TYPE-A interface and/or TYPE-C interface. In some other embodiments, for example, an AC output socket can be set up to supply power to AC powered devices.

A display screen 33a can also be set on the cover shell 30a to display real-time operating parameters of the energy storage device, or to display relevant parameters of the powered devices connected to the energy storage device.

It should be understood that most of the weight of the energy storage device comes from the battery module 20a. This embodiment sets the battery module 20a below the power module, which can lower the overall center of gravity of the energy storage device, thereby improving the stability of the energy storage device. When the energy storage device is installed on a carrier, it is not easily overturned, reducing the difficulty of installation.

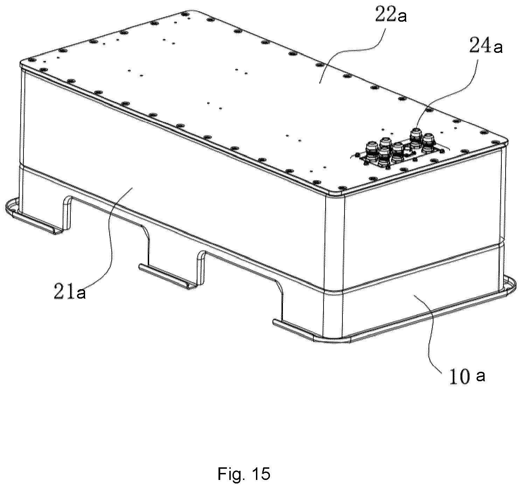

Referring to Fig. 15-18, in an optional embodiment of this embodiment, the battery module 20a includes a bottom shell 21a, battery units 23a, a power distribution unit 25a, external terminals 24a, and a cover plate 22a. The bottom shell 21a forms a container cavity that is open at the top and closed at the bottom. Multiple battery units 23a are contained within the container cavity, and each battery unit 23a is connected in series and/or parallel through copper busbars. The power distribution unit 25a is contained within the container cavity and connected to the copper busbars. The external terminals 24a are connected to the power distribution unit 25a, and the external terminals 24a are installed on a terminal base 26a. The cover plate 22a is connected to the top of the bottom shell 21a in a detachable manner to close the top of the bottom shell 21a. The cover plate 22a has through-holes 221a. The terminal base 26a is connected to the edge of the through-holes 221a to close the through-holes 221a and expose one end of the external terminals 24a on the top of the cover plate 22a.

This embodiment installs the battery units 23a in a sealed environment, improving the dust and water resistance of the battery units 23a. In a specific embodiment, for example, the edge of the cover plate 22a can be connected to the bottom shell 21a by bolts. When the cover plate 22a is installed on top of the battery module 20a, it can shield these bolts, thereby improving the appearance quality. The power module assemblies 40a can be installed on the cover plate 22a. When the battery units 23a need to be inspected, only the cover shell 30a needs to be removed, then the bolts around the cover plate 22a need to be removed, and the power module assemblies 40a can be removed as a whole from the top of the battery module 20a, improving the efficiency of inspection and repair.

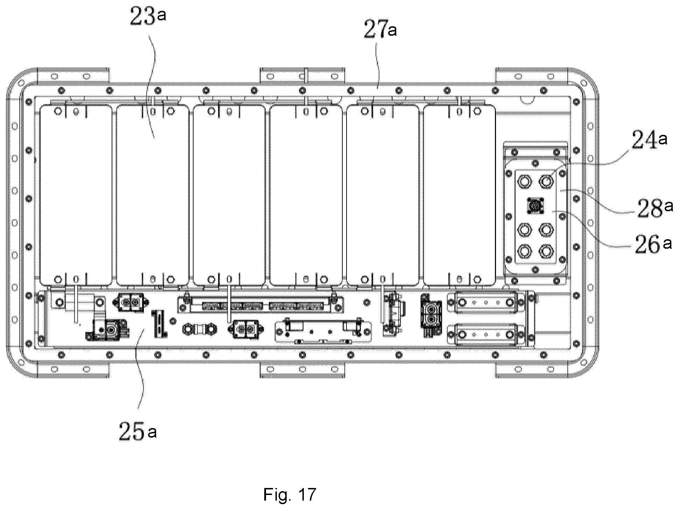

Referring to Fig. 17, in an optional embodiment of this embodiment, the battery unit 23a includes multiple battery cells stacked along a first direction. Multiple battery units 23a are arranged along a second direction within the container cavity. The first direction is perpendicular to the second direction, and both are horizontal directions. Furthermore, each battery unit 23a is placed against one of the side walls of the bottom shell 21a that is perpendicular to the first direction, and there is a gap between each battery unit 23a and the other side wall of the bottom shell 21a that is perpendicular to the first direction. The power distribution unit 25a is installed within this gap.

In a specific embodiment, for example, multiple battery cells can be combined into one battery module, and then multiple battery modules can be installed in the bottom shell 21a, or multiple battery cells can be directly installed in the bottom shell 21a. This embodiment arranges the battery cells closely and sets up the power distribution unit 25a in the gap between the battery cells and the bottom shell 21a, making the structure of the battery module 20a more compact and improving the overall energy density of the battery module 20a.

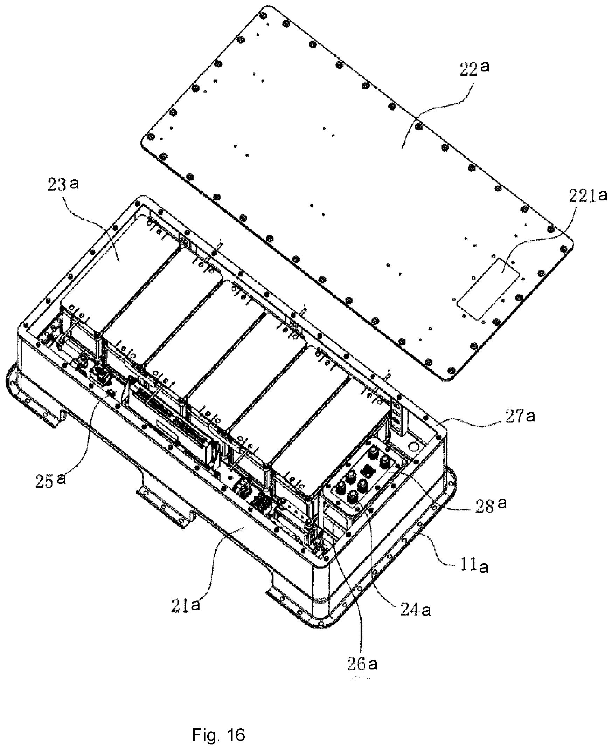

Referring to Fig. 16, in an optional embodiment of this embodiment, to further improve the dust and water resistance of the battery module 20a, a first sealing ring 27a is set between the cover plate 22a and the upper edge of the bottom shell 21a, and a second sealing ring 28a is set between the edge of the terminal base 26a and the edge of the through-holes 221a. In specific embodiments, the sealing rings can be solid components such as rubber pads or silicone pads, or they can be fillers such as sealant.

In other embodiments, the battery module 20a can also be composed of multiple detachable battery packs. These detachable battery packs can be first battery packs removed from electric tools, or second battery packs removed from ZTR or other off-road vehicles. The shape and capacity of the first battery packs are different from the second battery packs. Specifically, multiple detachable battery packs are contained in a partially open cavity. These detachable battery packs can be installed into or removed from the cavity through the partially open opening. The multiple detachable battery packs converge to form a connection interface, which is electrically connected to the power module assemblies 40a to receive external input power or output the power from the multiple detachable battery packs through the power module assemblies 40a.

Referring to Fig. 16, in an optional embodiment of this embodiment, the lower end of the terminal base 26a has support legs that extend to the bottom wall of the bottom shell 21a and are fixedly connected to it. It should be understood that the external terminals 24a are connected to the power distribution unit 25a through wire harnesses. To avoid pulling on the wire harnesses when removing the cover plate 22a, this embodiment connects the terminal base 26a to the bottom shell 21a. When the battery needs to be inspected, only the bolts between the cover plate 22a and the bottom shell 21a, and the bolts between the cover plate 22a and the terminal base 26a need to be removed. This allows the external terminals 24a and the terminal base 26a to remain in the bottom shell 21a, making it easy to remove the cover plate 22a and the power module above it as a whole.

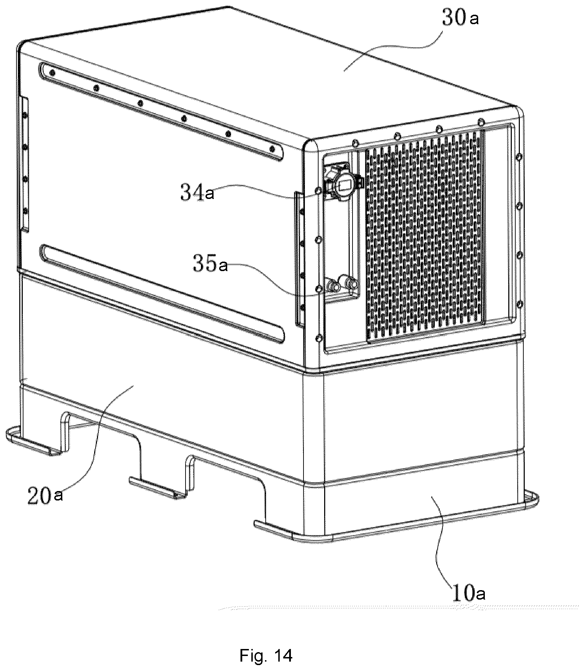

Referring to Fig. 13 and 14, in an optional embodiment of this embodiment, it also includes a support part 10a connected to the lower end of the bottom shell 21a. The lower edge of the support part 10a has a flange 11a, and the flange 11a has installation holes for installing ground bolts. The support part 10a can separate the battery module 20a from the floor of the carrier, providing some shock absorption effect on one hand, and preventing the battery module 20a from water immersion and other disasters in harsh outdoor environments on the other hand.

In an optional embodiment of this embodiment, the support part 10a is also configured with openings. The main purpose of the openings is to reserve some operating space for handling tools. For example, when transporting the energy storage device with a forklift, the fork plates at the front of the forklift can extend into the openings to facilitate the transportation of the energy storage device.

In an optional embodiment of this embodiment, to achieve a lightweight design of the energy storage device, the bottom shell 21a is made of stamped plates with a relatively thin thickness. Therefore, this embodiment sets reinforcing ribs on the inner side of the bottom wall and side walls of the bottom shell 21a to improve the structural strength of the bottom shell 21a.

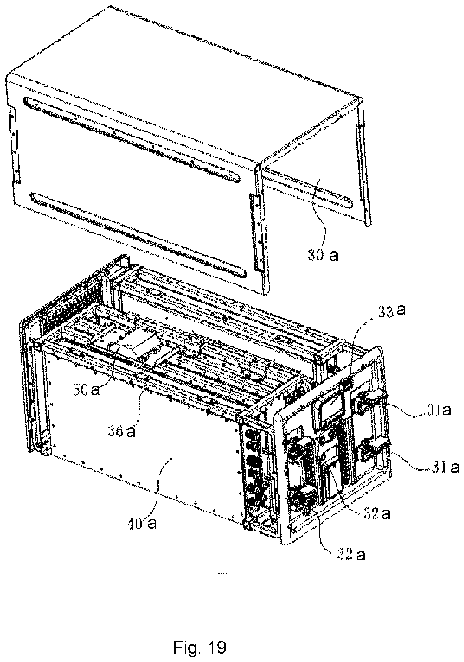

Referring to Fig. 19-26, in an optional embodiment of this embodiment, the power module assembly 40a includes a casing 41a, a power module 42a, and a heat dissipation module 43a. At least the first side wall of the casing 41a has a window 411a. The power module 42a includes a circuit board and power devices, and there can be one or more power modules 42a. The heat dissipation module 43a is connected to the circuit board and installed on the inner side of the first side wall, so that the power module 42a is contained within the casing 41a. At least part of the structure of the heat dissipation module 43a is exposed outside the casing 41a through the window 411a.

This embodiment encapsulates the entire power module 42a and part of the heat dissipation module 43a structure inside the casing 41a, improving dust and water resistance. At the same time, this embodiment exposes part of the heat dissipation module 43a structure outside the casing 41a, ensuring dust and water resistance while not affecting the heat dissipation performance of the power module 42a.

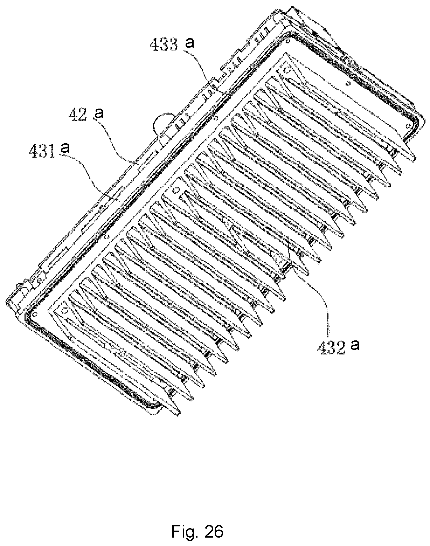

Referring to Fig. 26, in an optional embodiment of this embodiment, the heat dissipation module 43a includes a heat conductive backing plate 431a and heat sink fins 432a. The heat conductive backing plate 431a is fixedly connected to the circuit board, and the side of the heat conductive backing plate 431a facing away from the circuit board is fixedly connected to the heat sink fins 432a. The area ratio of the heat sink fins on the first side wall is greater than 70% to ensure that the heat dissipation efficiency meets the heat dissipation requirements of the power module 42a. The heat sink fins 432a pass through the window 411a and are exposed outside the casing 41a. The heat generated by the power module 42a is transferred to the heat sink fins 432a through the heat conductive backing plate 431a, and then the heat sink fins 432a dissipate the heat to the outside of the casing 41a, avoiding heat accumulation inside the casing 41a. This allows the power module 42a to be set more densely, further reducing the volume of the power module assembly 40a and improving the energy density of the energy storage device.

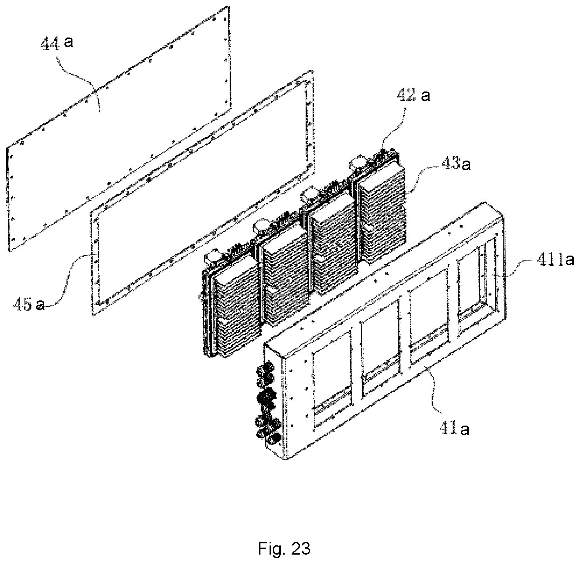

Referring to Fig. 23 and 26, in an optional embodiment of this embodiment, a first sealing part 433a is set between the edge of the window 411a and the heat dissipation module 43a. The first sealing part 433a surrounds the window 411a. Referring to Fig. 26, in an optional embodiment of this embodiment, the edge of the heat conductive backing plate 431a protrudes beyond the edge of the base of the heat sink fins 432a, forming a circular plane area. The first sealing part 433a is located between this circular plane area and the first side wall. In a specific embodiment, the first sealing part 433a can be, for example, a rubber pad, silicone pad, or sealant.

Referring to Fig. 23 and 26, in an optional embodiment of this embodiment, installation holes for installing the heat conductive backing plate 431a are set along the edge of the window 411a on the first side wall. These installation holes are located between the first sealing part 433a and the edge of the window 411a, preventing foreign objects from penetrating into the power module 42a through the installation holes.

Referring to Fig. 23, in an optional embodiment of this embodiment, a detachable second side wall 44a is set on the side opposite to the first side wall of the casing 41a. A second sealing part 45a is set between the second side wall 44a and the casing 41a. This embodiment sets the second side wall 44a as a detachable structure, facilitating the inspection and repair of the power module 42a.

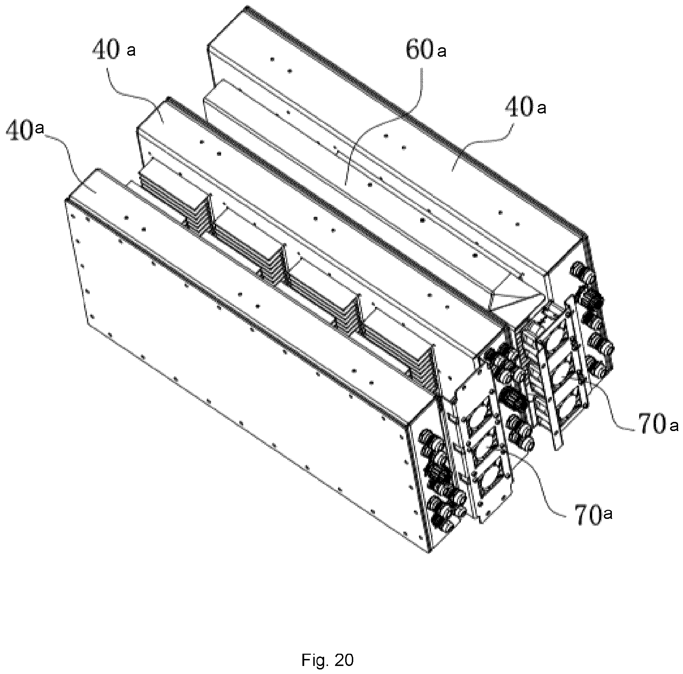

Referring to Fig. 20-22, 24, and 25, in an optional embodiment of this embodiment, there are three power module assemblies 40a. The power modules 42a in two of the power module assemblies 40a are DC/DC modules 401a, while the power module 42a in the other power module assembly 40a includes an AC/DC module 402a and a DC/AC module 403a. The three power module assemblies 40a can be fixed on the cover plate 22a through an aluminum alloy frame 36a, improving structural stability while reducing the weight of the energy storage device. In a further embodiment, an EVCC module 50a can also be integrated on top of the aluminum alloy frame. It should be understood that there are no special restrictions on the type and number of power modules 42a, which can be freely combined according to the requirements of actual design parameters. In this embodiment, the first side walls of two adjacent power module assemblies 40a are set opposite and spaced apart, forming a heat dissipation channel between these two power module assemblies 40a. A cooling fan 70a is set at at least one end of or within the heat dissipation channel.

The heat sink fins 432a are assembled so that their extension direction is parallel to the airflow direction produced by the cooling fan 70a. A flow guide cover 60a is set on the outside of the first side wall of another power module assembly 40a. The part of the heat dissipation module 43a exposed outside the casing 41a is contained within the flow guide cover 60a. There are openings at both ends of the flow guide cover 60a, and a cooling fan 70a is set at at least one end of or within the flow guide cover 60a. In a further embodiment, waterproof mesh can also be set at both ends of the heat dissipation channel and the flow guide cover 60a, further improving water resistance. Through this air duct arrangement, this embodiment ensures the heat dissipation performance of the power module 42a while increasing the installation density of the power module 42a.

In summary, this embodiment sets the battery module 20a below the power module 42a, which can lower the overall center of gravity of the energy storage device, thereby improving the stability of the energy storage device. When the energy storage device is installed on a carrier, it is not easily overturned, reducing the difficulty of installation. This embodiment arranges the battery cells closely and sets up the power distribution unit 25a in the gap between the battery cells and the bottom shell 21a, making the structure of the battery module 20a more compact and improving the overall energy density of the battery module 20a. This embodiment encapsulates the entire power module 42a and part of the heat dissipation module 43a structure inside the casing 41a, improving dust and water resistance. At the same time, this embodiment exposes part of the heat dissipation module 43a structure outside the casing 41a, ensuring dust and water resistance while not affecting the heat dissipation performance of the power module 42a.

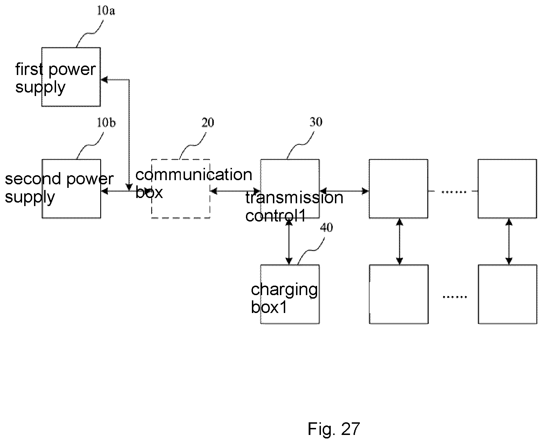

Fig. 27 shows a functional block diagram of the charging system in one embodiment of this application. As shown in Fig. 27, the charging system includes a first power supply device 10ab, a second power supply device 10bb, and a charging device, which is connected to the first power supply device 10ab or the second power supply device 10bb. The charging device includes several transmission control modules 30b connected in series, each transmission control module 30b is equipped with a charging interface for connecting to a receiving device 40b. The transmission control module 30b is used to control the receiving device 40b connected to itself to access or disconnect from the charging device.

As shown in Fig. 27, the first power supply device 10ab or the second power supply device 10bb serves as the front end of the charging system, used to supply DC power to the DC bus of the charging device to power the receiving devices 40b, and also to provide 12V auxiliary power to the auxiliary power bus of the charging device, providing working power for the second control unit in the back-end transmission control module 30b and the battery management unit in the receiving device 40b.

The first power supply device 10ab and the second power supply device 10bb are different types of power supply devices, meaning that the charging device can use DC power provided by different types of power supply devices to charge the receiving devices 40b. The first power supply device 10ab can be loaded onto a carrier and can use internal backup power or external input power to supply power to garden tools such as lawn mowers or battery pack chargers in outdoor environments, improving the endurance of garden tools. The second power supply device 10bb is a charger that can convert AC power, such as mains electricity, into DC power output to the charging device.

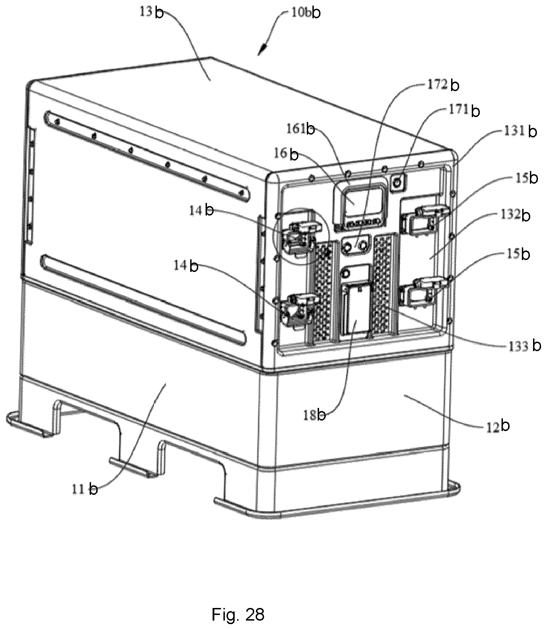

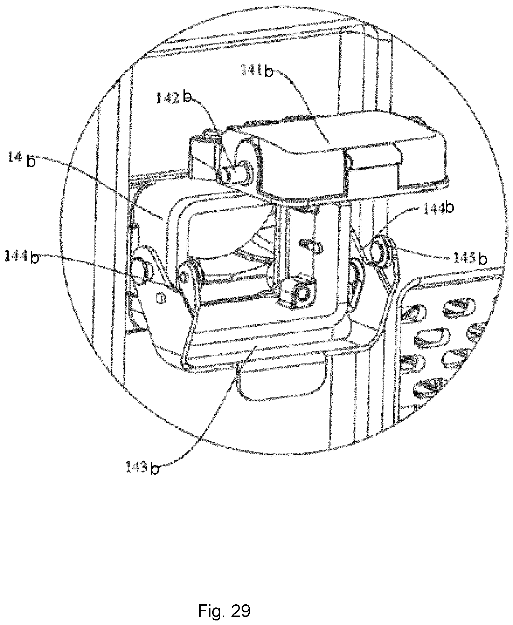

Fig. 28 and Fig. 29 show the structural diagram of the first power supply device 10ab in a specific embodiment. Referring to Fig. 28 and Fig. 29, the first power supply device 10ab includes a battery module 12b, a cover shell 13b, power module assemblies, a DC output interface, and a support part 11b. The cover shell 13b is installed on the top surface of the battery module 12b, forming a storage cavity with the top surface of the battery module 12b. Multiple power module assemblies are electrically connected to the battery module 12b, each power module assembly is contained within the storage cavity and fixedly connected to the top surface of the battery module 12b, i.e., the power module assemblies and the battery module 12b are arranged vertically. The DC output interface is electrically connected to the power module assemblies and installed on the front panel 131b of the cover shell 13b. The DC output interface is used to output power externally to supply power to the externally connected receiving device 40b. The support part 1 1b is connected to the lower end of the battery module 12b, which can separate the battery module 12b from the floor of the carrier, providing some shock absorption effect on one hand, and preventing the battery module 12b from water immersion and other disasters in harsh outdoor environments on the other hand. Of course, in other embodiments, the cover shell 13b can be installed on the side of the battery module 12b, forming a storage cavity with the side of the battery module 12b, and the power module assemblies are contained within this storage cavity, i.e., the battery module 12b and the power module assemblies are arranged horizontally.

In a specific embodiment, the front panel 131b of the cover shell 13b is recessed inward to form an installation part 132b. The DC output interface, display screen 16b, AC socket, and module switches are set in this installation part 132b. If the top surfaces of the components installed in the installation part 132b are not higher than the front panel 131b, it can prevent damage to the display screen 16b, DC output interface, AC socket, and module switches due to collisions during normal charging and transportation. Of course, the top surfaces of the components installed in the installation part 132b can also be higher than the front panel 131b.

As shown in Fig. 28 and Fig. 29, in an optional embodiment of this application, since the first power supply device 10ab needs to be used outdoors, to prevent rainwater from entering the DC output interface, a flip cover 141b can be set for the DC output interface. The flip cover 141b can be hinged on the DC output interface or the installation part 132b. The flip cover 141b has a first position and a second position. When the flip cover 141b is in the first position, it covers the DC output interface, thus avoiding safety hazards caused by rainwater reaching the DC output interface. When the flip cover 141b is in the second position, it exposes the DC output interface, allowing it to supply power normally. Of course, the flip cover 141b can also be connected to the DC output interface or the installation part 132b by a strap or chain, or it can be configured as an independent cover.

As shown in Fig. 28 and Fig. 29, in an optional embodiment of this application, a locking mechanism is also set at the DC output port to achieve locking and unlocking of the flip cover 141b. The locking mechanism has position a and position b. When the locking mechanism is in position a, the flip cover 141b is in the first position and locked, unable to be opened. When the locking mechanism is in position b, the flip cover 141b is unlocked and can be adjusted from the first position to the second position. By setting up a locking mechanism, it can avoid situations where vibrations during transportation or accidental opening by children occur, increasing safety. This is particularly necessary for high-power DC output interfaces.

In a specific embodiment, as shown in Fig. 28 and Fig. 29, the locking structure includes a locking part 143b and locking pins 142b. The locking part 143b is hinged on both sides of the DC output port. Both sides of the locking part 143b have locking slots 144b corresponding to the locking pins 142b. The locking pins 142b are set on both sides of the flip cover 141b. When the flip cover 141b is in the first position, i.e., covering the DC output port, the locking part 143b can be pushed upward to rotate around the hinge axis, making the locking pins 142b engage with the locking slots 144b, achieving locking. When unlocking is needed, the locking part 143b can be pulled downward to rotate around the hinge axis, separating the locking slots 144b from the locking pins 142b, thus unlocking the flip cover 141b.

Additionally, as shown in Fig. 28 and Fig. 29, to make it easier for the locking pins 142b of the locking part 143b to engage with the locking slots 144b, and to prevent the locking pins 142b from disengaging from the locking slots 144b during transportation of the first power supply device 10ab, a guiding element 145b is also set on the locking part 143b. The guiding element 145b can be made of elastic material, such as rubber. The guiding element 145b is rotatably set at the entrance of the locking slots 144b on the locking part 143b. When the guiding element 145b contacts the locking pins 142b during the upward pushing rotation of the locking part 143b around the hinge axis, the rotation of the guiding element 145b can make it easier for the locking pins 142b to engage with the locking slots 144b. After the locking pins engage with the locking slots 144b, the elasticity of the guiding element can prevent the locking pins 142b and locking slots 144b from disengaging during transportation. Of course, in some embodiments, the guiding element 145b can also be made of rigid material, such as metal.

As shown in Fig. 28 and Fig. 29, in an optional embodiment of this application, to prevent rainwater from entering the AC socket during outdoor operations, a cover plate 18b can be set for the AC socket. The cover plate 18b is hinged on the installation part 132b or the AC socket. The cover plate 18b can flip up and down around the hinge axis to switch between position c and position d. When the cover plate 18b is in position c, it exposes the AC socket, allowing normal power output. When the cover plate 18b is in position d, it covers the AC socket, thus avoiding safety hazards caused by rainwater reaching the AC socket. Of course, the cover plate 18b can also be configured to slide on the installation part 132b or the AC socket through a slide rail structure. Sliding the cover plate 18b can expose or cover the AC socket.

As shown in Fig. 28, in an optional embodiment of this application, a display screen 16b is also set on the installation part 132b of the front panel 131b. The display screen 16b is inclined inward gradually from top to bottom. This inclined design makes it difficult for rainwater to adhere to the display panel, preventing rainwater from entering the gap between the display screen 16b and the installation part 132b, which could damage the display screen 16b. Of course, in other embodiments, the display screen 16b can also be set vertically, or inclined outward gradually from top to bottom, making it easier for users to see the display interface during operation.

As shown in Fig. 28, in an optional embodiment of this application, to further prevent rainwater from wetting the display screen 16b, a shielding part is also set on the installation part 132b. The shielding part is arranged along the outer circle of the display screen except for the bottom part, i.e., the shielding part forms an opening for rainwater to flow out at the bottom of the display screen, preventing rainwater accumulation.

As shown in Fig. 28, in an optional embodiment of this application, ventilation windows 133b are also opened on the installation part 132b of the front panel 131b for cooling the power module assemblies. There is a pair of ventilation windows 133b, symmetrically set on both sides of the AC socket. Each ventilation window 133b is located between the DC output interface and the AC socket. Placing the ventilation windows 133b between the DC output interface and the AC socket not only makes rational use of space but also keeps the DC output interface and AC socket at a certain distance to prevent mutual interference. Of course, the position and number of ventilation windows 133b can be adjusted as needed.

As shown in Fig. 28, in an optional embodiment of this application, to meet waterproof requirements, a breathable waterproof layer can be set inside the ventilation windows 133b. This breathable waterproof layer should prevent rainwater from entering the device through the ventilation windows 133b and damaging components without affecting normal air flow. As an example, the breathable waterproof layer can be a breathable waterproof mesh. Of course, in another embodiment, if the modules inside the power module assemblies that need to be waterproof are sealed, even if rainwater enters, it won't damage the components in the power module assemblies, so the breathable waterproof mesh may not be necessary.

As shown in Fig. 28, in an optional embodiment of this application, the DC output interface includes a first DC output interface 14b and a second DC output interface 15b. The maximum output power of the first DC output interface 14b is greater than that of the second DC output interface 15b. The first DC output interface 14b is electrically connected to the power module assemblies and is used to charge high-power equipment such as ZTR and other non-road garden vehicles or charging equipment. The communication protocol of the first DC output interface 14b is the same as that of the charging device.

The second DC output interface 15b serves as an expansion interface, electrically connected to the power module assemblies, used to charge low-power devices such as battery packs. In one embodiment, the second DC output interface 15b can charge removable battery packs contained in a charging box through the charging box. It's understood that the number of first DC output interfaces 14b and second DC output interfaces 15b in the energy storage device can be flexibly set according to needs.

The maximum output power of the first DC output interface 14b is greater than 4KW, while the maximum output power of the second DC output interface 15b is not greater than 4KW. As an example, the maximum output power of the first DC output interface 14b can be 5KW, 6KW, 7KW, or 8KW, with an output current range between 0-105A; the maximum output power of the second DC output interface 15b can be 1KW, 2KW, 3KW, or 4KW. Fig. 28 shows a case including two first DC output interfaces 14b and two second DC output interfaces 15b.

Referring to Fig. 28, in an optional embodiment of this application, a first module switch 171b and a second module switch 172b are also set on the front panel 131b. The first module switch 171b is a recharge switch, which can control the recharging of the backup power source inside the first power supply device 10ab. The second module switch 172b serves as the startup and shutdown switch for the entire machine, used to control the startup and shutdown of the entire machine. When the DC output interface has a plug detection function, it supplies power externally when a plug is detected, and does not supply power when no plug is detected, thus avoiding the safety hazard of the DC output interface being constantly energized and reducing energy consumption.

In another specific embodiment, when the DC output interface doesn't have plug detection, the first module switch 171b can serve as the main switch for the entire machine, controlling its startup and shutdown. The second module switch 172b can serve as the DC control switch for the DC output interface, controlling the energized state of the DC output interface, which can also address the safety hazard of long-term energization of the DC output interface and reduce energy consumption. Additionally, an extra recharge switch can be arranged to recharge the backup power source.

Referring to Fig. 27, the charging system also includes a communication control module 20b, which can be integrated into the first power supply device 10ab or the second power supply device 10bb, or connected as an external module. The communication control module 20b controls each transmission control module 30b to ensure that only one receiving device 40b is connected to the charging device for charging at the same time. This enables automatic switching without human supervision through the first power supply device 10ab or the second power supply device 10bb, to charge multiple receiving devices 40b one by one, without power limitations. When a receiving device 40b is connected to the charging interface and communicating with the first power supply device 10ab or the second power supply device 10bb, it represents that the receiving device 40b is accessing the charging system. When a receiving device 40b is connected to the charging interface but disconnected from the first power supply device 10ab or the second power supply device 10bb, it represents that the receiving device 40b is disconnecting from the charging system.

In one embodiment, the communication control module 20b is a communication integration box, an external module independent of the first power supply device 10ab or the second power supply device 10bb. Designing a separate communication integration box allows compatibility with existing first power supply devices 10ab or second power supply devices 10bb, enabling them to directly adapt to this application's charging system without needing improvements. Of course, the communication control module 20b can also be directly integrated into the first power supply device 10ab or the second power supply device 10bb as an integral structure.

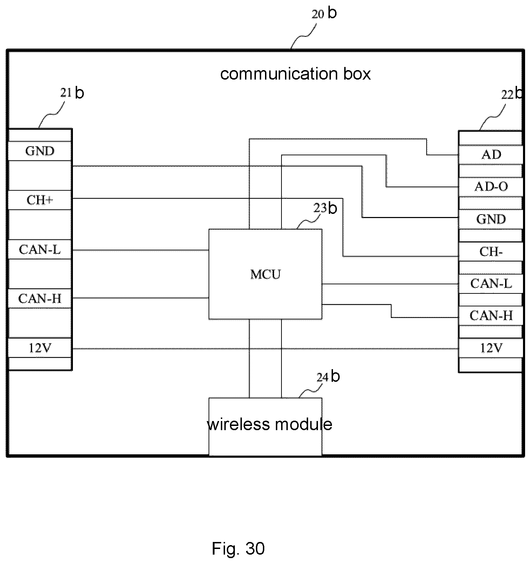

As shown in Fig. 27 and Fig. 30, the communication control module 20b is connected between the first power supply device 10ab and the charging device, or between the second power supply device 10bb and the charging device. The communication control module 20b is connected to each transmission control module 30b via CAN bus for communication, serving as a relay module for information exchange. Its main function is to complete the communication management and information collection and reporting of various transmission control modules 30b connected to the back-end charging device, while also completing the communication interaction between the transmission control modules 30b and the charger through relay.

As shown in Fig. 30, in one embodiment, the communication control module 20b includes a first control unit 23b, a first input interface 21b, and a first output interface 22b. The first control unit 23b is connected to both the first input interface 21b and the first output interface 22b. The first input interface 21b is externally connected to the charger, connecting with the charger's charging gun. The second output interface 32b is connected to the second input interface 31b of the first transmission control module 30b in the directional transmission control system.

Specifically, the first input interface 21b includes GND terminal, CH+ terminal, CAN-H terminal, CAN-L terminal, and auxiliary power terminal. The first output interface 22b includes AD terminal, AD-O terminal, GND terminal, CH+ terminal, CAN-H terminal, CAN-L terminal, and auxiliary power terminal. The GND terminal, CH+ terminal, and auxiliary power terminal of the first input interface 21b are connected to the corresponding terminals of the first output interface 22b. The first controller is connected to the CAN-H and CAN-L terminals of the first input interface 21b, and the CAN-H, CAN-L, AD, and AD-O terminals of the first output interface 22b.

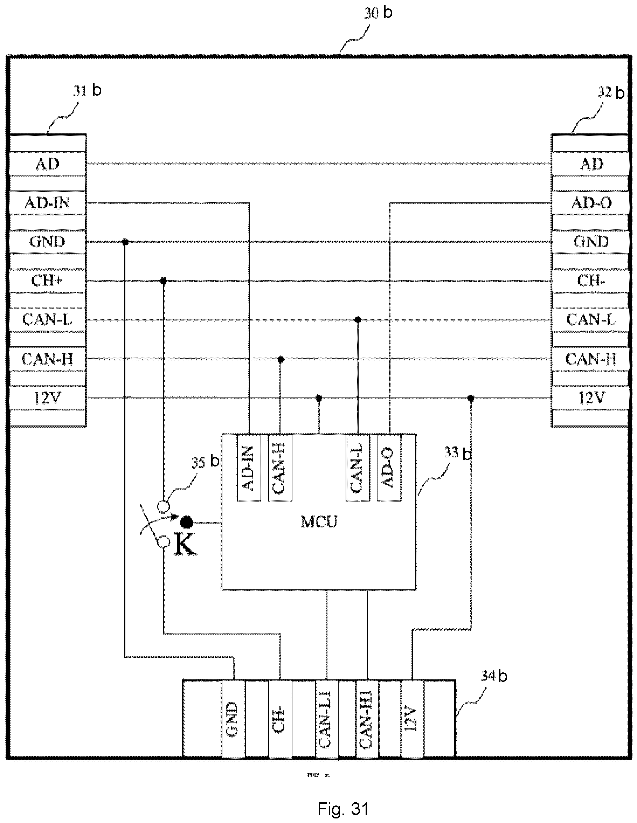

As shown in Fig. 27 and Fig. 31, in one embodiment, several transmission control modules 30b connected in series form a directional power transmission system. The first transmission control module 30b is connected to the communication control module 20b. The transmission control module 30b is mainly used to control the transmission of charging power from the first power supply device 10ab or second power supply device 10bb to each receiving device 40b.

The transmission control module 30b includes a second control unit 33b, a second input interface 31b, a second output interface 32b, and a charging interface 34b. The second control unit 33b is connected to the second input interface 31b, second output interface 32b, and charging interface 34b respectively. The second input interface 31b is connected to the communication control module 20b or the second output interface 32b of the next-level transmission control module 30b. The second input interface 31b is also connected to the charging interface 34b.

It should be noted that in one embodiment, to facilitate the expansion of the charging device, the transmission control module 30b is equipped with an expansion connection port. This expansion connection port allows for the expansion connection of transmission control modules 30b in the charging device. When adjacent transmission control modules 30b are directly connected via quick-release connections, the expansion connection port refers to the first input interface 21b and second input interface 31b of the transmission control module 30b. These interfaces can either be ports set on the transmission control module 30b or interfaces led out through connection cables. By adopting an expandable design, the number of transmission control modules 30b in the charging device can be expanded according to the number of receiving devices 40b, making the number of charging interfaces 34b unlimited. This allows for providing corresponding charging interfaces 34b for each receiving device 40b, showing great application prospects.

Specifically, as shown in Fig. 31, the second input interface 31b includes AD terminal, AD-IN terminal, GND terminal, CH+ terminal, CAN-H terminal, CAN-L terminal, and auxiliary power terminal. The second output interface 32b includes AD terminal, AD-O terminal, GND terminal, CH+ terminal, CAN-H terminal, CAN-L terminal, and auxiliary power terminal. The second control unit 33b includes AD-IN terminal, CAN-H terminal, CAN-L terminal, and AD-O terminal. The charging interface 34b includes GND terminal, CH+ terminal, CAN-H1 terminal, CAN-L1 terminal, and auxiliary power terminal. The corresponding terminals of the second input interface 31b are connected to those of the second output interface 32b. The AD-IN terminal of the second input interface 31b is connected to the AD-IN terminal of the second control unit 33b, and the AD-O terminal of the second control unit 33b is connected to the AD-O terminal of the second input interface 31b. The second control unit 33b is mounted on the CAN bus between the second input interface 31b and second output interface 32b via its CAN-H and CAN-L terminals. The CAN-H1 and CAN-L1 terminals of the charging interface 34b are connected to the second control unit 33b, while the GND, CH+, and auxiliary power terminals of the charging interface 34b are connected to the ground wire, DC bus, and auxiliary power bus between the second input interface 31b and second output interface 32b respectively.

As shown in Fig. 31, in one embodiment, a control switch 35b is set on the connection line between the CH+ terminal of the charging interface 34b and the DC bus between the second input interface 31b and second output interface 32b. This control switch 35b can control the connection between the DC bus and the CH+ terminal of the charging interface 34b based on instructions from the second control unit 33b, effectively controlling power transmission to the receiving device 40b. This control switch 35b serves as a redundant design, working together with the relay between the battery management unit 42b and the battery pack in the receiving device 40b to increase the reliability of the charging system operation.

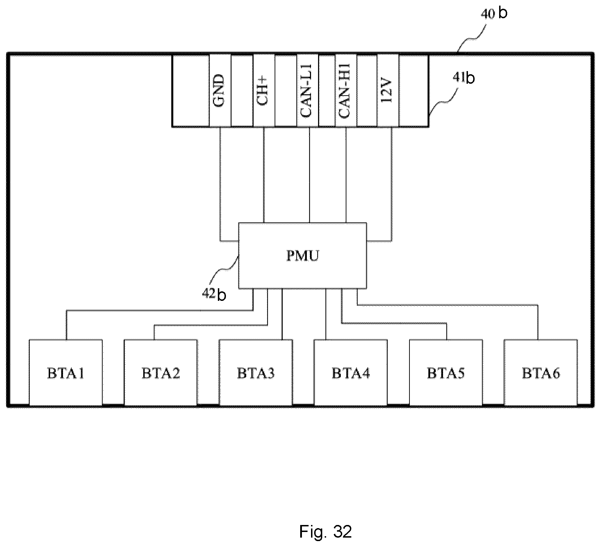

As shown in Fig. 32, in one embodiment, the receiving device 40b is a charging box that can accommodate multiple battery packs for charging. The charging box includes a third input interface 41b (also called PMU connector), a battery management unit 42b, and several battery packs. One end of the battery management unit 42b is connected to the charging interface 34b of the transmission control module 30b via the third input interface 41b, while the other end is connected to the internal battery packs. Fig. 32 shows a charging box that can accommodate up to 6 battery packs for charging. It's understood that the maximum number of battery packs that can be inserted into the charging box can be designed according to actual needs.

The third input interface 41b matches the terminals of the charging interface 34b, also including GND terminal, CH+ terminal, CAN-H1 terminal, CAN-L1 terminal, and auxiliary power terminal. The receiving device 40b completes communication and charging connection with the transmission control module 30b through the battery management unit 42b, as well as charging of the internal battery packs.

As shown in Fig. 30, in one embodiment, the communication control module 20b also includes a wireless module 24b, which is used to report collected information to the cloud. The wireless module 24b can be, for example, a WiFi module or a Bluetooth module. When the wireless module 24b is a WiFi module, it can directly upload the operating data of the entire charging system to the cloud via wireless network. When the wireless module 24b is a Bluetooth module, it needs to use the Bluetooth function of a mobile terminal, utilizing the 4G or 5G network of the mobile terminal to upload the operating data of the entire system to the cloud.

As shown in Fig. 27, Fig. 30, and Fig. 31, in one embodiment, the charging system also includes an end wiring cover. This end wiring cover is fitted on the second output interface 32b of the last transmission control module 30b. One function of the end wiring cover is to close off the second output interface 32b of the last transmission control module 30b. Another function is to short-circuit connect the AD-O port with the AD port of the second output interface 32b of the last transmission control module 30b. This allows the AD signal sent from the AD-O port of the communication control module 20b to transmit through the AD-IN and AD-O terminals of the transmission control modules 30b in sequence, and return to the communication control module 20b via the AD port of the last transmission control module 30b, forming an AD communication loop. The communication control module 20b is also used to assign communication addresses to each transmission control module 30b of the charging device in sequence through the AD communication loop.

It should be noted that when the charging system is powered on, an AD detection signal can always be maintained in the AD communication loop. Since the expansion of new transmission control modules 30b will cause AD communication interruption and inability to receive the AD detection signal returned through the AD communication loop, it's possible to determine whether a new transmission control module 30b has been connected by checking whether the returned AD detection signal is received. The newly connected transmission control module 30b remains silent before being assigned a communication address because it hasn't been allocated one.

It should be noted that during the charging process, when new transmission control modules 30b are expanded and connected to the charging device, there are two ways to assign addresses to the newly connected transmission control modules 30b:

First method: When the communication control module 20b detects that a new transmission control module 30b is connected to the charging device, it immediately stops charging. The communication control module 20b then reassigns addresses to all transmission control modules 30b in the charging device through the AD communication loop.

Second method: Wait until the currently charging receiving device 40b completes charging. The transmission control module 30b corresponding to the completed receiving device 40b sends a charging completion command to the communication control module 20b. After receiving this command, the communication control module 20b reassigns addresses to all transmission control modules 30b in the charging device through the AD communication loop.

In one embodiment, when multiple receiving devices 40b are connected to the charging system through transmission control modules 30b, the communication control module 20b can charge the receiving devices 40b connected to each transmission control module 30b one by one, according to the series order of the transmission control modules 30b in the charging device. It's understood that in other embodiments, charging can also be done according to other preset rules.

In one embodiment, when charging a receiving device 40b of a certain transmission control module 30b, the communication control module can send a silence command to all transmission control modules 30b via the CAN bus or AD communication loop. After receiving the silence command, the transmission control modules 30b adjust their communication status based on their charging status. If charging, they maintain normal communication status. If not charging, they maintain a restricted communication status. Transmission control modules 30b in restricted communication status do not actively send charging requests to the communication control module 20b, but only send their own status information (e.g., whether a receiving device 40b is connected) and the status information of the connected receiving device 40b (e.g., whether a battery pack is inserted in the receiving device 40b) to the CAN bus. In other words, during the charging process, all transmission control modules 30b except the one currently charging maintain a restricted communication status.

In one embodiment, during the charging process, the transmission control module 30b also monitors the communication status between the receiving device 40b and the communication control module 20b, judges the working status of the entire charging system, and monitors the health status of the receiving device 40b. When an abnormality occurs in the working status of the entire charging system and/or the health status of the receiving device 40b, the transmission control module 30b cuts off all connections between the receiving device 40b and the communication control module 20b. It also displays the abnormal status on its display panel and informs the communication control module 20b to wait for switching to the next receiving device 40b before continuing work. The communication control module 20b calls other transmission control modules 30b one by one via the CAN bus to check if charging is needed. When there's a receiving device 40b of another transmission control module 30b, it will respond. After receiving the response, the communication control module 20b will charge the receiving device 40b of that transmission control module 30b.

In one application scenario, the first power supply device 10ab, communication integration box, and several transmission control modules 30b can be arranged and deployed on a trailer or truck, forming a mobile charging system. Charging boxes are placed on the trailer or truck and connected to the charging interfaces 34b of the transmission control modules 30b, using the energy storage device to charge all battery packs in the charging boxes.

This application's embodiment provides an energy storage device that adopts a detachable mounting base design. The mounting base can be replaced or removed according to different installation requirements to adapt to various usage scenarios. Moreover, all electrical components of the energy storage device are encapsulated in independent sealed chambers, providing excellent dust and water resistance, making it suitable for outdoor use. It can charge garden tools such as lawnmowers, improving their operational endurance. The following detailed explanation of this application's technical solution is combined with specific embodiments.

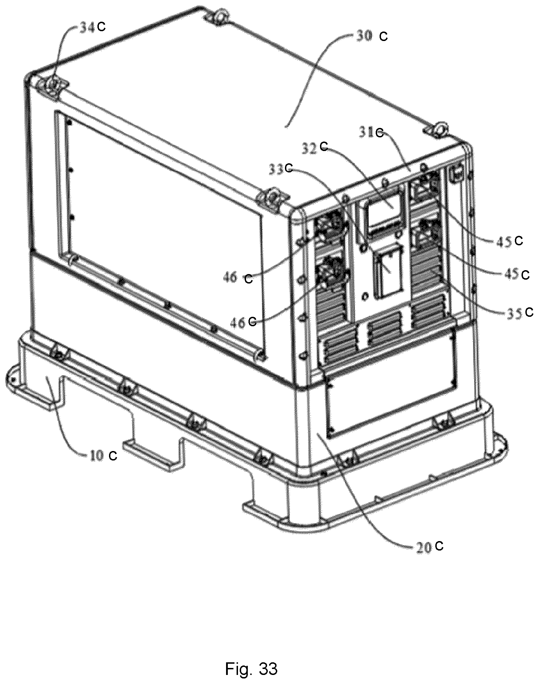

Please refer to Fig. 33, which shows the energy storage device provided by this application's embodiment, including a first battery module 20c, a first power module assembly 40c, and a mounting base 10c.

Among these, the first power module assembly 40c is detachably installed on at least part of the interface of the first battery module 20c. This allows the first battery module 20c to be used independently or assembled with the first power module assembly 40c for use. When the first power module assembly 40c is configured to connect with an external power supply device, current flows along a first path from the external power supply device into the first battery module 20c. When connected to an external electrical device, current flows along a second path from the first battery module 20c into the external electrical device. The mounting base 10c is detachably connected to the first battery module 20c. The mounting base 10c is equipped with positioning elements that are compatible with the installation interface of the carrier. Through these positioning elements, the energy storage device can be positioned and installed on the carrier. The carrier can be a vehicle compartment, wall, or other surface or side that can support the weight of the energy storage device or the first battery module 20c. The positioning elements can be mounting holes, a combination of mounting holes and grooves, pins, or any positioning structure that can prevent significant relative displacement between the energy storage device and the installation interface. Taking a vehicle compartment as an example, the grooves can correspond to reinforcing rib structures or protruding structures at the installation interface inside the compartment. The positioning elements can make the mounting base 10c fit more tightly with the installation interface, allowing the energy storage device or the first battery module 20c to be stably installed on the corresponding installation interface of the carrier.

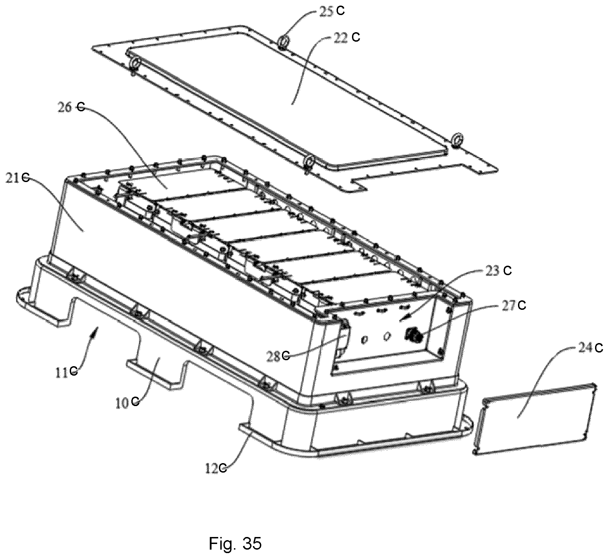

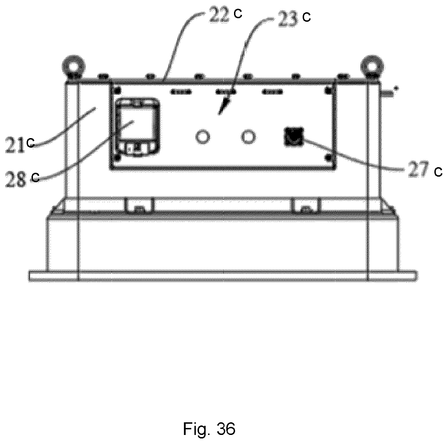

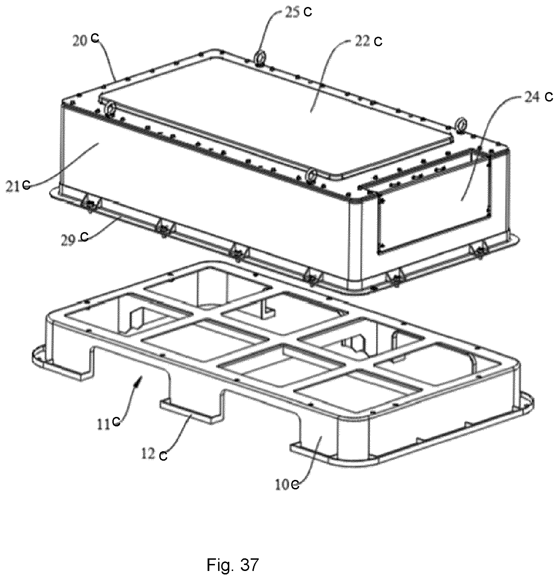

As shown in Fig. 33-Fig. 37, the mounting base 10c can be detachably installed via bolts or buckles on the circular protruding rim 29c at the bottom end of the first battery module 20c's bottom shell 21c, to support the energy storage device or the first battery module 20c vertically. The lower edge of the mounting base 10c has a flanged edge 12c with mounting holes for installing ground bolts. The mounting base 10c can separate the first battery module 20c from the carrier's installation interface, which provides some shock absorption effect and also prevents water damage and other hazards to the first battery module 20c in harsh outdoor environments.

Different mounting bases 10c can be designed for different installation interfaces. In practical use, an appropriate mounting base 10c can be selected based on the installation interface. When the mounting base 10c is not needed, or when the installation height is insufficient, the mounting base 10c can be removed. In other words, the mounting base 10c can be replaced or removed according to different installation requirements to adapt to various usage scenarios.

As shown in Fig. 33-37, the mounting base 10c can further include an operation opening 11c. The main purpose of the operation opening 11c is to provide some operational space for handling tools. For example, when transporting the energy storage device or the first battery module 20c with a forklift, the forklift's front plates can extend into the opening for easier handling of the energy storage device.

Since the mounting base 10c is designed to be detachable, at least two types of mounting bases 10c can be configured for the energy storage device or the first battery module 20c. These are a first mounting base and a second mounting base, both detachably connected to the first battery module 20c. The first mounting base is equipped with first positioning elements compatible with a first installation interface, while the second mounting base is equipped with second positioning elements compatible with a second installation interface. The first positioning elements differ from the second positioning elements. Similarly, three or more types of mounting bases 10c can be configured for the energy storage device or the first battery module 20c, depending on the installation interfaces involved in actual use.

It should be noted that the first installation interface and the second installation interface can be different interfaces on the same carrier or interfaces on different carriers. The first positioning elements can refer to mounting holes, or a combination of mounting holes and grooves. Similarly, the second positioning elements can also refer to mounting holes, or a combination of mounting holes and grooves.

In a specific application scenario, let's assume there are two vehicles, a first vehicle and a second vehicle. The first vehicle has a first installation interface, and the second vehicle has a second installation interface. When using the first vehicle to carry the energy storage device or the first battery module 20c, a first mounting base with first positioning elements compatible with the first installation interface can be installed at the bottom of the first battery module 20c. This allows the energy storage device or the first battery module 20c to be loaded onto the first vehicle via the first mounting base. When using the second vehicle to carry the energy storage device or the first battery module 20c, a second mounting base with second positioning elements compatible with the second installation interface can be installed at the bottom of the first battery module 20c. This allows the energy storage device or the first battery module 20c to be loaded onto the second vehicle via the second mounting base. The first vehicle, the second vehicle, and the energy storage device can form a mobile energy storage system.

As shown in Fig. 33-Fig. 37, in a specific embodiment of this implementation, the first battery module 20c includes a first housing, battery cells 26c, and external output terminals 27c. The external output terminals 27c include positive terminals, negative terminals, and communication terminals. A detachable first window 24c is set on the side wall of the first housing, with the external output terminals 27c located within the first window 24c. One end of the external output terminals 27c is connected to the battery cells 26c, while the other end can be electrically connected to the first power module assembly 40c through busbars 47c. By detaching the first window 24c, it can be changed from a first state to a second state. In the first state, the first window 24c is connected to the first housing, isolating the external output terminals 27c from the outside at least in the direction perpendicular to the first window 24c. In the second state, the first window 24c is at least partially away from the first housing, exposing the external output terminals 27c to allow changes in the connection between the first power module assembly 40c and the first battery module 20c and/or an external second battery module. The first window 24c can be connected to the first housing via screws or hinges, or through a sliding connection combined with screw connections. As an example, when the first battery module 20c connected to the first power module assembly 40c is low on power, the first window 24c can be put in the second state, then the connection between the first power module assembly 40c and the first battery module 20c can be disconnected, and then the first power module assembly 40c can be electrically connected to an external second battery module with sufficient power.

As an example, by putting the first window 24c in the second state, the first power module assembly 40c connected to the first battery module 20c can be disconnected. Then, the first battery module 20c can be electrically connected to an external second power module assembly to provide power to the external second power module assembly.

As an example, when the output power of the first battery module 20c cannot meet the power requirements of the first power module assembly, the first window 24c can be put in the second state. Then, one or more external second battery modules can be connected to the first power module assembly 40c, allowing the first battery module 20c and the external second battery modules to be connected in parallel to jointly power the first power module assembly 40c.

As an example, since the first battery module 20c is quite heavy and inconvenient to move, the first window 24c can be put in the second state to disconnect the first battery module 20c from the first power module assembly. The first power module assembly 40c can then be detached from the first battery module 20c and transported to the work site, while the first battery module 20c remains in its original location. The electrical connection between the first battery module 20c and the first power module assembly 40c can then be achieved through an extended wiring harness.

It should be noted that in this embodiment, the external second battery module can refer to the first battery module 20c of other energy storage devices or other external battery modules. The external second power module assembly can refer to the first power module assembly 40c of other energy storage devices or other external power module assemblies.

The first battery module 20c also includes a circuit breaker 28c, which is located within the first window 24c. It is used to connect or disconnect the current flow path between the battery cells of the first battery module 20c and the external output terminals 27c. Specifically, when an abnormality occurs in the first battery module 20c or the first power module assembly 40c and the power needs to be cut off, the circuit breaker 28c can be controlled to open, disconnecting the current flow path between the battery cells of the first battery module 20c and the external output terminals 27c, thereby improving the safety performance of the energy storage device. After the abnormality is resolved, the circuit breaker 28c can be reset to reconnect the current flow path between the battery cells of the first battery module 20c and the external output terminals 27c. The current flow path here can be either from the external power supply device through the external output terminals 27c to the battery cells of the first battery module 20c, or from the battery cells of the first battery module 20c through the external output terminals 27c to the external electrical device. In other words, when an abnormality occurs during the charging or discharging process of the battery cells of the first battery module 20c, the circuit breaker 28c can disconnect the current flow path to ensure safe electricity use. When the abnormality is resolved, the circuit breaker current can be restored. This restoration can be controlled by the controller in the first battery module 20c or can be done manually.

As shown in Fig. 33-Fig. 37, in a specific implementation of this application, the first housing includes a bottom shell 21c and a cover plate 22c. The bottom shell 21c forms a containment cavity that is open at the top and closed at the bottom. The cover plate 22c is detachably connected to the top of the bottom shell 21c to close the top of the bottom shell 21c. The side wall of the bottom shell 21c has a recessed part 23c, and the first window 24c is set in the recessed part 23c, forming a containment space with the recessed part 23c. The circuit breaker 28c and the external output terminals 27c are placed in this containment space, that is, on the inner wall of the recessed part 23c. The battery cells 26c are contained within the containment cavity, and multiple battery cells 26c are connected in series and parallel and then electrically connected to the external output terminals 27c.

To further enhance the dust and water resistance of the first battery module 20c, a sealing ring is placed between the cover plate 22c and the upper edge of the bottom shell 21c. The sealing ring can be a solid component such as a rubber pad or silicone pad, or it can be a filler such as sealant. The waterproof rating of the first housing is at least IPX5.

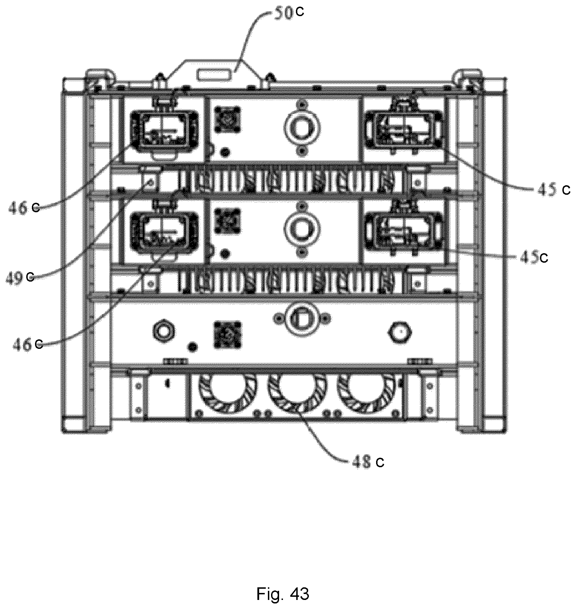

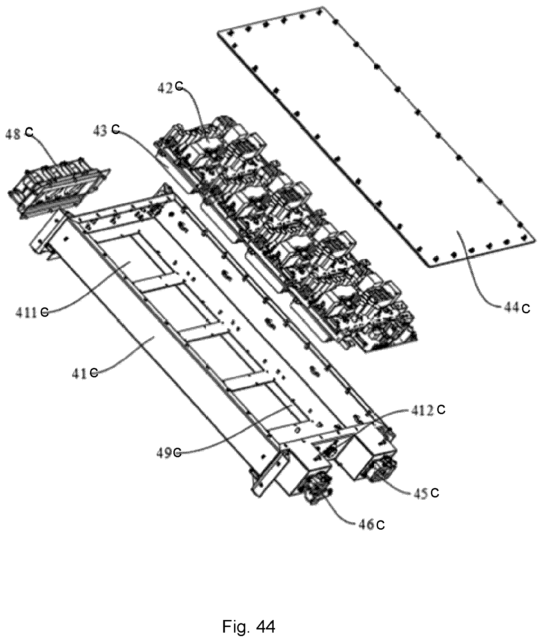

As shown in Fig. 33 and Fig. 38-Fig. 44, in a specific implementation of this application, the energy storage device also includes a cover shell 30c and a charger interface. The cover shell 30c is installed on the top surface of the first battery module 20c, forming a storage cavity with the top surface of the first battery module 20c. The first power module assembly 40c is electrically connected to the first battery module 20c and is contained within the storage cavity. The charger interface is electrically connected to the first power module assembly 40c and is used to supply power to external electrical devices. Since most of the weight of the energy storage device comes from the first battery module 20c, placing the first battery module 20c below the first power module assembly 40c can lower the overall center of gravity of the energy storage device, thereby improving its stability. When the energy storage device is installed on a carrier, it is less likely to tip over, reducing the difficulty of installation. Similarly, in other embodiments, the cover shell 30c can also be installed on the side of the first battery module 20c, forming a storage cavity with the side of the first battery module 20c, with the first power module assembly 40c contained within this storage cavity.

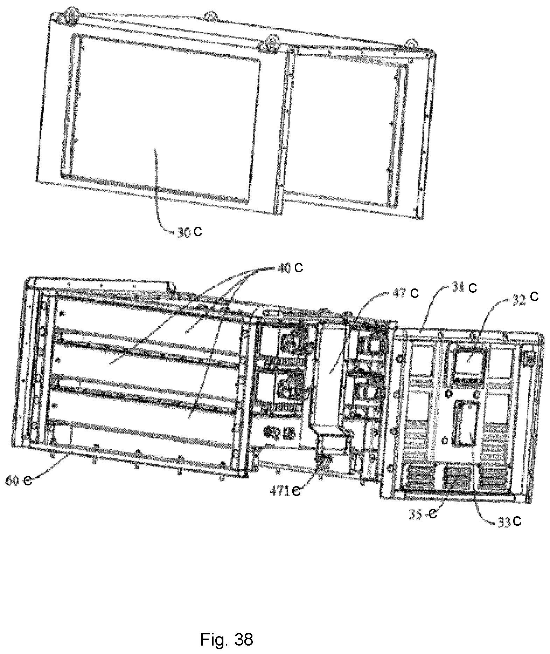

As shown in Fig. 38, the energy storage device also includes busbars 47c. The busbars 47c are located between the first power module assembly 40c and the front panel 31c of the cover shell 30c, and above the first window 24c. The top of the first window 24c has an open structure to allow the connection cables between the busbars 47c and the external output terminals 27c to pass through. The input end of the first power module assembly 40c is electrically connected to the external output terminals 27c of the first battery module 20c through the busbars 47c.

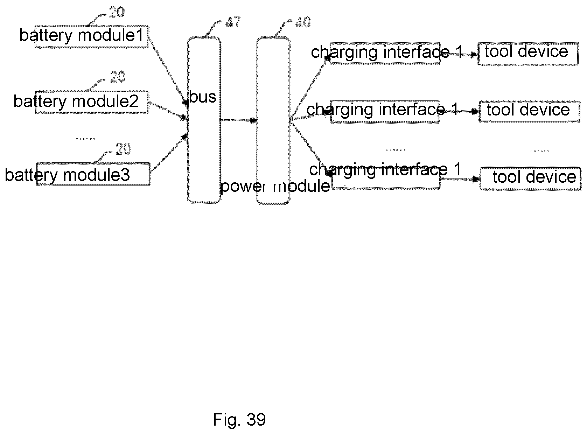

Similarly, in other embodiments, the busbars 47c can also be designed similarly to the external output terminals 27c, with several input ports and several external output ports set in a detachable window. The input ports are used to connect with the external output terminals 27c and/or the external output terminals of other external second battery modules. The output ports are used to connect with the input terminals of the first power module assembly 40c and/or other external second power module assemblies. The connection control between battery modules and power module assemblies can be achieved through the busbars 47c. The busbars are similar to a power strip, allowing flexible changes in the connection method between battery modules and power module assemblies. The following examples corresponding to Fig. 39-Fig. 41 will illustrate this.

As shown in Fig. 39, in an exemplary embodiment, the input ports of the busbars 47c can be connected to the first battery module 20c and n-1 external second battery modules, so that n battery modules output power to the first power module assembly 40c. The first power module assembly 40c supplies power to external electrical devices through m charger interfaces connected to it, where n is a positive integer greater than or equal to 2, and m is a positive integer greater than or equal to 1.

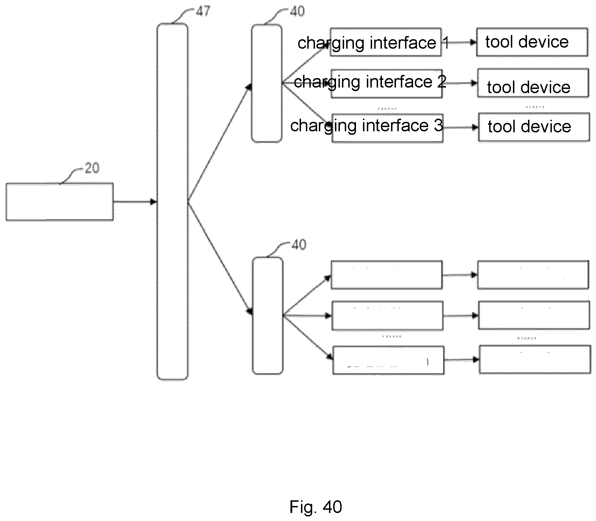

As shown in Fig. 40, in an exemplary embodiment, when the capacity of the first battery module 20c is relatively large, the output ports of the busbars 47c can be connected to the first power module assembly 40c and one external second power module assembly. This allows the first battery module 20c to simultaneously output power to two power module assemblies. The two power module assemblies then supply power to external electrical devices through m charger interfaces connected to each of them, where m is a positive integer greater than or equal to 1. Similarly, there can also be two or more second power module assemblies.

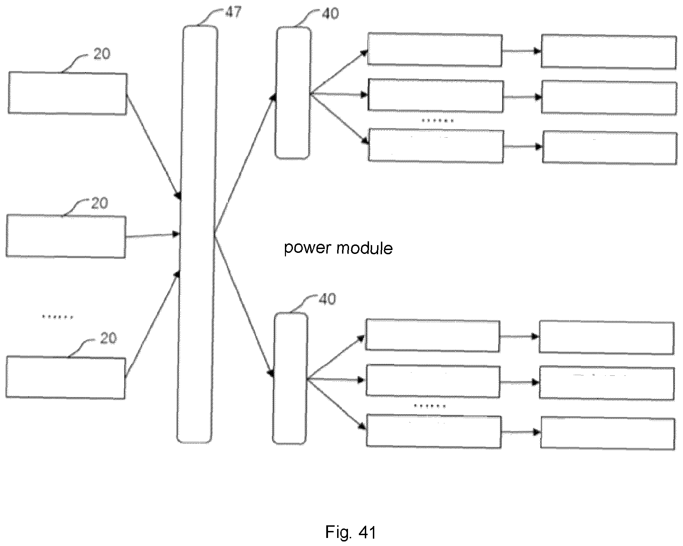

As shown in Fig. 41, in an exemplary embodiment, the input ports of the busbars 47c can be connected to the first battery module 20c and n-1 external second battery modules. The output ports of the busbars 47c are connected to the first power module assembly 40c and one external second power module assembly, allowing n battery modules to power two power module assemblies. The two power module assemblies then supply power to external electrical devices through m charger interfaces connected to each of them, where n is a positive integer greater than or equal to 2, and m is a positive integer greater than or equal to 1. Similarly, there can also be two or more second power module assemblies.

As shown in Fig. 38 and Fig. 42-Fig. 44, the energy storage device includes three first power module assemblies 40c. The power modules 42c in two of the first power module assemblies 40c are DC/DC modules, while the power module 42c in the other first power module assembly 40c includes both AC/DC and DC/AC modules. The three first power module assemblies 40c are arranged vertically spaced apart within the cover shell 30c and are detachably installed on the cover plate 22c of the first battery module 20c through an aluminum alloy frame 60c. This improves structural stability while reducing the weight of the energy storage device. Each first power module assembly 40c is arranged horizontally, which allows the components in the first power module assembly 40c to be vertically arranged on the circuit board, providing good vibration test performance and reliability, while also making installation and maintenance easier. Of course, the number of first power module assemblies 40c can be flexibly set according to needs, and the first power module assemblies 40c can also be directly detachably connected to the cover plate 22c of the first battery module 20c without using the aluminum alloy frame 60c.

In a further embodiment, an EVCC module 50c can be integrated above the aluminum alloy frame 60c. It should be understood that there is no special limitation on the number of first power module assemblies 40c, and they can be freely combined according to the requirements of actual design parameters.

In this embodiment, each first power module assembly 40c is an independent and sealed unit. This design allows the waterproof rating of the first power module assembly 40c to reach IPX6c or above. Each independent power module assembly is easy to inspect and replace. If one of the power module assemblies has an abnormality and needs to be disassembled for inspection, the screws on the side can be directly removed.

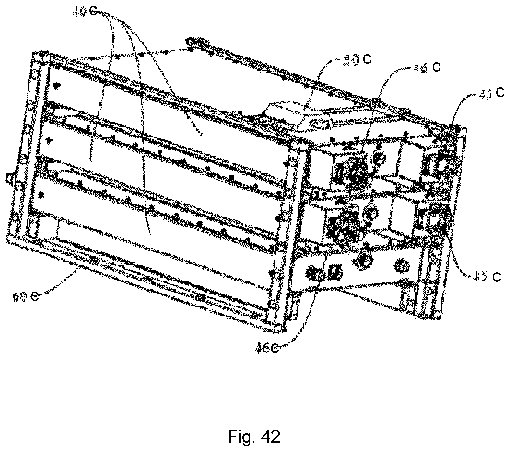

Specifically, as shown in Fig. 42-44, the first power module assembly 40c includes a second housing 41c, power module 42c, and heat dissipation module 43c. A second window 411c is opened on the first wall of the second housing 41c. The power module 42c includes a circuit board and power devices, and there can be one or more power modules 42c. The heat dissipation module 43c is connected to the circuit board and installed on the inner side of the first wall, allowing the power module 42c to be contained within the second housing 41c. At least part of the heat dissipation module 43c is exposed outside the second housing 41c through the second window 411c. The edge of the second window 411c is sealed with the heat dissipation module 43c using rubber pads, silicone pads, or sealant. A detachable second wall 44c is set on the side of the second housing 41c opposite to the first wall. The second wall 44c is sealed with the second housing 41c using rubber pads or silicone pads, allowing the waterproof rating of the first housing to reach IPX5c or above, such as IPX6c. It should be noted that in this embodiment, the first wall of the second housing 41c refers to the bottom wall, and the second wall 44c refers to the top wall. Of course, the first wall of the second housing 41c could also refer to the top wall, and the second wall 44c could refer to the bottom wall.

As shown in Fig. 42-44, two flow guide walls 49c are also set on the outer side of the first wall of the second housing 41c. These two flow guide walls 49c are spaced on both sides of the second window 411c and extend from one end to the other along the length of the second housing 41c. The first wall of the second housing 41c and the flow guide walls 49c, along with the second wall 44c of the adjacent first power module assembly 40c or the interface of the first battery module 20c (such as the cover plate 22c), define a heat dissipation channel. The exposed part of the heat dissipation module 43c outside the second housing 41c is contained within this heat dissipation channel. A cooling fan 48c is set at the rear end of the heat dissipation channel. Of course, the cooling fan 48c can also be set inside the heat dissipation channel, at its front end, or at both its front and rear ends. This application encapsulates the entire power module 42c and part of the heat dissipation module 43c structure within the second housing 41c, improving dust and water resistance. At the same time, exposing part of the heat dissipation module 43c structure outside the second housing 41c ensures dust and water resistance while not affecting the heat dissipation performance of the power module 42c.

In an optional embodiment of this application, the charger interface refers to DC output sockets, AC output sockets 33c, TYPE-A interfaces, TYPE-C interfaces, etc., through which the energy storage device provides power to external electrical devices. The DC output sockets include a first DC output socket 46c and a second DC output socket 45c, where the maximum output power of the first DC output socket 46c is greater than that of the second DC output socket 45c. The first DC output socket 46c is electrically connected to the power module assembly and is used to charge high-power equipment such as ZTR and other non-road garden vehicles or charging equipment. The second DC output socket 45c serves as an expansion socket, electrically connected to the power module assembly, used to charge low-power devices such as battery packs. It can be understood that the number of first DC output sockets 46c and second DC output sockets 45c in the energy storage device can be flexibly set according to needs.

The maximum output power of the first DC output socket 46c is greater than 4KW, while the maximum output power of the second DC output socket 45c is not more than 4KW. As an example, the maximum output power of the first DC output socket 46c can be 5KW, 6KW, 7KW, or 8KW, with an output current range between 0-105A. The maximum output power of the second DC output socket 45c can be 1KW, 2KW, 3KW, or 4KW.

It should be noted that since the energy storage device needs to be used outdoors, to prevent rainwater from entering the DC output sockets, flip covers and locking mechanisms can be provided for the DC output sockets. The flip covers can cover the DC output sockets when they are not supplying power externally, avoiding safety hazards caused by rainwater exposure. The locking mechanism can lock the flip cover when it's closed over the DC output socket, preventing accidental opening due to vibration during transportation or by children, thus increasing safety.

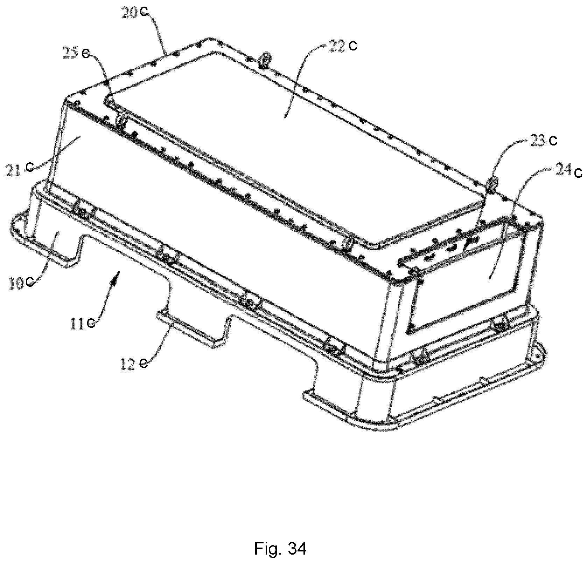

In this embodiment, due to the significant weight of the energy storage device, detachable first hoisting devices 34c can be set on the first power module assembly 40c, and/or second hoisting devices 25c can be set on the first battery module 20c, facilitating hoisting. To achieve balanced weight during hoisting, the number of hoisting devices needs to be greater than two. Fig. 33 shows four first hoisting devices 34c set at the four top corners of the first power module assembly 40c. These four first hoisting devices 34c pass through the top of the cover shell 30c and are bolt-connected to the aluminum alloy frame 60c, ensuring structural strength. Of course, if the structural strength of the cover shell 30c is sufficient, the first hoisting devices 34c can also be directly fixed to the cover shell 30c. Fig. 34-Fig. 37 show four second hoisting devices 25c detachably set in the mounting holes on the cover plate 22c of the first battery module 20c. When assembling the first battery module 20c with the first power module assembly 40c, the second hoisting devices 25c need to be removed. When using the first battery module 20c alone and hoisting is required, the second hoisting devices 25c can be installed on the first housing of the first battery module 20c.

As shown in Fig. 33, in an optional embodiment of this application, a display screen 32c is also set on the front panel 31c, used to display real-time operating parameters of the energy storage device or related parameters of electrical devices connected to the energy storage device. The display screen 32c is gradually inclined inward from top to bottom. This inclined design makes it difficult for rainwater to adhere to the display panel, preventing rainwater from entering the gap between the display screen 32c and the front panel 31c, which could damage the display screen 32c. Of course, in other embodiments, the display screen 32c can also be set vertically or gradually inclined outward from top to bottom, making it easier for users to see the display interface during operation.

As shown in Fig. 33, in an optional embodiment of this application, ventilation windows 35c are also opened on the front panel 31c for heat dissipation of the power module assembly. The ventilation windows 35c adopt a louver design, which ensures heat dissipation while preventing rainwater from entering the interior of the energy storage device through the ventilation holes, increasing device safety.

In summary, this application can adapt to different usage scenarios by setting up detachable mounting bases 10c, which can be replaced or removed according to different installation requirements. By setting external output terminals 27c in the side window of the battery module and combining them with busbar 47c design, this application can change the connection relationship between battery modules and power module assemblies as needed, expanding the usage scenarios of the energy storage device and thus increasing the flexibility of user power consumption. By encapsulating the entire power module and part of the heat dissipation module 43c structure within the housing, this application improves dust and water resistance effects.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A gardening apparatus, comprising:
a tool device;
a battery module (12b), wherein the battery module (12b) is coupled to the tool device for supplying power to drive the tool device, wherein the battery module (12b) comprises:
a housing with a receiving cavity;
at least one battery cell disposed within the receiving cavity;
a power management module (20) electrically connected to the at least one battery cell;
at least one power interface electrically connected to the power management module (20) and accessible from outside the housing;
wherein the power management module is configured to control power flow between the at least one battery cell and the at least one power interface.

2. The gardening apparatus of claim 1, wherein the power management module (20) comprises:
an AC input terminal for connection to an AC power source;
a power output terminal connected to a DC bus (10);
an auxiliary power output terminal;
wherein the power management module (20) is configured to convert AC power from the AC power source to DC power for the DC bus (10).

3. The gardening apparatus of claim 2, further comprising:
a backup power source (30), wherein the backup power source (30) comprises:
an energy storage unit (32), wherein a second input/output terminal of the energy storage unit is connected to a first input/output terminal of the backup power source, wherein a charge of the energy storage unit serves as a charge of the backup power source (30);
a second switch unit (33), connected in series between the first input/output terminal and the second input/output terminal;
a DC/DC converter (34), wherein an input terminal of the DC/DC converter is connected to the second input/output terminal;
a battery management unit (35), wherein a power terminal of the battery management unit is connected to both an output terminal of the DC/DC converter (34) and an enable terminal of the backup power source (30);
wherein when the charge of the energy storage unit (32) is less than or equal to a critical value, the battery management unit (35) is configured to detect a voltage at the output terminal of the DC/DC converter (34), and when the voltage is below a preset voltage threshold and a first switch unit (31) is closed, control the second switch unit (33) to close, allowing the energy storage unit (32) to be charged through the DC bus (10).

4. The gardening apparatus of claim 3, wherein the backup power source (30) further comprises:
a third switch unit (36), connected in series to the input terminal of the DC/DC converter (34), wherein the third switch unit (36) is configured to serve as a startup switch for the backup power source (30) and is not closed simultaneously with the first switch unit (31);
wherein the battery management unit (35) is further configured to monitor a working state of the third switch unit (36): when the third switch unit (36) is closed, send a startup signal to the power management module (20).

5. The gardening apparatus of claim 3, wherein:
a first diode (D1) is connected in series between the output terminal of the DC/DC converter (34) and the enable terminal of the backup power source (30), wherein an anode of the first diode (D1) is connected to the output terminal of the DC/DC converter (34) and a cathode of the first diode (D1) is connected to the enable terminal of the backup power source (30);
a second diode (D2) is connected in series between the first switch unit (31) and the enable terminal of the backup power source (30), wherein an anode of the second diode (D2) is connected to one end of the first switch unit (31) and a cathode of the second diode (D2) is connected to the enable terminal of the backup power source (30).

6. The gardening apparatus of claim 3, wherein the battery management unit (35) is connected to the power management module (20) through a digital signal port, configured to feed back an emergency fault status signal of the backup power source (30) to the power management module (20).

7. The gardening apparatus of claim 2, wherein the power management module (20) further includes a photovoltaic input terminal, connected to a photovoltaic power source, and the power management module (20) is further configured to convert DC power from the photovoltaic power source and output the converted DC power through the power output terminal and the auxiliary power output terminal.

8. The gardening apparatus of claim 7, wherein the power management module (20) further comprises:
an AC/DC converter, wherein an input terminal of the AC/DC converter serves as the AC input terminal, configured to convert AC power from an AC charging pile or a power grid to DC power output;
a photovoltaic interface, wherein an input terminal of the photovoltaic interface serves as the photovoltaic input terminal, configured to convert and output the DC power from the photovoltaic power source;
an energy management unit, configured to control operation of the AC/DC converter, the photovoltaic interface, and a power output module, as well as communicate and interact with the battery management unit (35) of the backup power source (30).

9. The gardening apparatus of claim 8, further comprising:
a charging pile detection module (60), connected to both the power management module (20) and the AC charging pile for communication, used to identify an output power of the AC charging pile;
wherein the energy management unit is further configured to determine an AC input power of the AC/DC converter based on a maximum allowable current of the AC/DC converter and a maximum output current of the AC charging pile or the power grid.

10. The gardening apparatus of claim 2, further comprising:
an auxiliary power bus (50);
wherein the power management module (20) further includes a second auxiliary power output terminal (2#), connected to the auxiliary power bus (50).

11. The gardening apparatus of claim 10, wherein the power output module (40) comprises:
a DC/AC inverter, wherein an input terminal of the DC/AC inverter is connected to the DC bus (10) and an output terminal of the DC/AC inverter is used for connection to an external AC load;
a fourth switch unit (42), wherein an enable terminal of the DC/AC inverter is connected to the auxiliary power bus (50) through the fourth switch unit (42);
wherein the power management module (20) is further configured to control the fourth switch unit (42) to cut off an AC output of the DC/AC inverter when the AC output by the DC/AC inverter exceeds a preset power threshold.

12. The gardening apparatus of claim 2, further comprising:
a human-machine interaction module (70), configured to communicatively connect to the power management module, used to display at least one of: charging information of the backup power source (20), charging information of the gardening apparatus and a load, grid-connected or off-grid information of the gardening apparatus, fault information of the gardening apparatus, a 4G signal of the gardening apparatus, and a GPS signal of the gardening apparatus.

13. The gardening apparatus of claim 2, further comprising:
a backup power source (30) including an input/output terminal, an enable terminal, and a first switch unit;
wherein the input/output terminal is connected to the DC bus (10), and the enable terminal is connected to the auxiliary power output terminal through the first switch unit (31);
wherein the backup power source (30) is configured to supply power to the DC bus (10) when a charge of the backup power source (30) is above a critical value, and receive power from the DC bus (10) when the charge of the backup power source is at or below the critical value.

14. The gardening apparatus of claim 2, further comprising:
a first charging socket electrically connected to the power management module (20) and configured to charge a first garden tool at a first power level;
a second charging socket electrically connected to the power management module (20) and configured to charge a second garden tool at a second power level;
wherein the first power level is greater than the second power level.

15. The gardening apparatus of claim 2, wherein the battery module further comprises:
a cover (13b) installed on a top surface of the battery module (12b), forming a storage compartment with the top surface;
multiple power module assemblies electrically connected to the battery module (12b) and fixed to the top surface within the storage compartment.

16. The gardening apparatus of claim 2, wherein the power management module (20) comprises:
a casing (41a) with at least a first side wall having a window (411a);
a power module (42a) including a circuit board and power devices;
a heat dissipation module (43a) connected to the circuit board and installed on an inner side of the first side wall;
wherein at least a portion of the heat dissipation module (43a) is exposed outside the casing (41a) through the window (411a).

17. The gardening apparatus of claim 2, further comprising:
a charging system including a first power supply device (10ab), a second power supply device (10bb), and a charging device connected to either the first power supply device (10ab) or the second power supply device (10bb);
wherein the charging device includes a plurality of serially connected transmission control modules (30b), each transmission control module (30b) having a charging interface for connecting to a powered device and controlling connection or disconnection of the powered device to the charging device.

18. The gardening apparatus of claim 2, wherein the battery module further comprises:
a power module assembly detachably installed on at least a portion of an interface of the battery module (12b);
wherein the power module assembly is configured to:
direct current along a first path from an external power supply device to the battery module when connected to the external power supply device;
direct current along a second path from the battery module to an external powered device when connected to the external powered device.

19. The gardening apparatus of claim 2, wherein the housing of the battery module comprises:
a removable first window (24c) on a side wall of the housing;
external output terminals (27c) set in the first window (24c), wherein one end of the external output terminals (27c) is connected to the at least one battery cell (26c) and another end of the external output terminals (27c) is connectable to an external power module assembly;
wherein in a first state, the first window (24c) is connected to the housing to isolate the external output terminals (27c) from an exterior in a direction perpendicular to the first window (24c);
wherein in a second state, the first window (24c) is at least partially separated from the housing, exposing the external output terminals (27c) to allow changing a connection relationship between the battery module and the external power module assembly.

20. 2The gardening apparatus of claim 2, wherein the battery module comprises a temperature sensor for sending a wireless signal to alarm when a detected temperature is over a threshold.
